# EUROPEAN PATENT APPLICATION

(11) **EP 1 363 223 A1**
(43) Date of publication of application: **19.11.2003**
(21) Application number: 03101415.2
(22) Date of filing: 19.05.2003
(51) Int. Cl.: G06F 17/60

(54) **Method and system for executing foreign exchange transactions**

(30) Priority: 17.05.2002 US 380860 P
(71) Applicant: Instinet Global Holdings, Inc., New York, NY 10036 (US); Instinet Inc., New York, NY 10036 (US)
(72) Inventor: SRIVASTAVA, Vikas, , (US); NELSON, Andrew, , (US); CAGGIANO, John, 10025, New York (US)
(74) Representative: Johansson, Lars E.

(57) **Abstract**

A method and system for executing foreign exchange transactions anonymously via an online communications network with minimal market impact at a transparent price. An embodiment of the present invention involves a novel execution product offering two distinct services. The first is a crossing service in which buy and sell orders for each currency pair are matched directly against each other for execution at a future benchmark rate. The matching of orders and the clearing and settlement of each execution is facilitated and no market risk is undertaken. The second service is an optional residual program where, if a 100% fill on an order is desired, the customer can choose to have unmatched or residual of orders executed at the benchmark rate. Market risk associated with guaranteeing the Benchmark rate is undertaken, just as it is with the current benchmark execution process. For both services, customers pay a transparent commission.

## Description

### CROSS -REFERENCE TO RELATED APPLICATIONS

This application claims priority to, and herein incorporates by reference in its entirety, Applicants' copending U.S. Provisional Application No. 60/380,860 filed May 17, 2002.

### FIELD OF THE INVENTION

The present invention relates generally to a method and system for executing foreign exchange (FX) transactions. More particularly, but not by way of limitation, the present invention is a method and system for investors to anonymously execute FX transactions via an online communications network, such as the internet, with minimal market impact at a transparent price.

### BACKGROUND OF THE INVENTION

International investors currently lack neutral, anonymous and centralized access to foreign exchange execution. Currently, they are limited primarily to a few execution methods when buying and selling currencies, whether to settle securities transactions, to hedge, or to speculate.

They can employ an FX execution desk in order to transact in the market or, alternatively, use an FX provider's online execution platform. If the currency trades are related to securities transactions, they also can leave execution to their custodian or securities broker. None offer the ability to execute a transaction without leaving a "footprint" in the market. In addition, none offer an effective way to minimize the market impact of large transactions.

Although many of the major financial institutions in the market today that serve institutional investors and large fund managers provide e-commerce solutions that execute trades, these solutions essentially involve automating traditional phone trading mechanisms, wherein the orders are placed over the internet or via other electronic means, rather than on the phone with a salesperson. For these systems, the process downstream remains the same.

For example, in the case of a fund manager who manages a hundred different funds having a foreign exchange component, the fund manager would place a call to a salesperson and ask for a market quote for an aggregate amount. These aggregate amounts are sometimes fairly large. In providing a price for this order, the financial institution would consider the impact the order would have on the market. Further, once the order is executed, the fund may be giving away valuable information to the financial institution about its position or about a position it wishes to take.

As mentioned above, existing financial institutions do have e-commerce solutions, or websites, where investors, for example, can place an RFQ (request for a quote) on almost any amount. Yet, none offer the ability to execute FX transactions in a manner guaranteed to avoid any impact in the market and in a way designed to ensure that market participants do not know that a transaction has occurred.

As a further example, in a scenario where one investor is a net buyer of dollars and another investor is a net seller of dollars, and these amounts are more or less the same, the price the financial institution receives will reflect the price impact the order will have on the market, resulting in a less beneficial price. The first investor would get a fair price, but not as good as he could have received. To continue the scenario, if, for example, 15 minutes later, a second investor has an interest to sell dollars, the price that investor would receive would again reflect the impact that the trade would have on the market. Therefore, both investors receive a less beneficial price that is partly a reflection of the cost of executing the trade into the market. Both of them, as end users, receive less efficient execution. Accordingly, for the reasons set forth above, there is a need for a novel method and system to resolve these issues and provide a way for investors to quietly and anonymously execute FX transactions with minimal market impact at a transparent price.

### SUMMARY OF THE INVENTION

The present invention overcomes the above-noted and other shortcomings by providing a new, novel, and improved method and system, referred herein as Instinet FX Cross^{SM}, that meets the aforementioned needs.

An embodiment of the present invention involves a novel execution product offering two distinct services. The first is a crossing service in which buy and sell orders for each currency pair are matched directly against each other for execution at a future benchmark rate, for example, the CitiFX® Benchmark rate. Here, partnering organizations, such as, Instinet® and Citibank®, facilitate the matching of orders and the clearing and settlement of each execution, but do not undertake any market risk.

The second service is an optional residual program. Here, if a 100% fill on an order is desired, the customer can choose to have unmatched or residual portions of orders executed by Citibank®, for example, also at the CitiFX® Benchmark rate. Citibank® undertakes the market risk associated with guaranteeing the Benchmark rate, just as it does with its current Benchmark execution process. For both services, customers pay a transparent commission.

For all orders entered through the Instinet FX Cross^{SM}, customers enjoy complete anonymity. No member of the Citibank® front office learns the identities of customers behind orders. As mentioned above, the Instinet FX Cross^{SM} offers customers a way to quietly and anonymously execute FX transactions with minimal market impact. The crossing service provides an opportunity to execute FX orders with zero market impact at a transparent price and the residual program provides a way to guarantee a 100% fill at a transparent price.

An embodiment of the Instinet FX Cross^{SM} platform is, for example, a browser-based Instinet® branded product, supported by CitiFX® functionality. The features of this embodiment includes: Providing a crossing service to the FX market through a working partnership between organizations, such as, Instinet® and Citibank®; empowering the investor in the FX market as Instinet® does in the equity market; reducing transactions costs, including market impact, for the investor; promoting benchmark pricing and price transparency in the FX market; Promoting the business to fund. managers via their relationships with Instinet®; and exploiting Citibank®'s brand and FX expertise.

Features of the present invention to partnering organizations, such as, Citibank® and Instinet® include, for example: Providing a new business line with a significant revenue stream to both partners; solidifying the organizations' relationships with fund managers; strengthening the relationship between the partnering organizations; and promoting the CitiFX® Benchmark to a new client base.

Embodiments for the present invention also involve methods and systems for partnering organizations to conduct foreign exchange transactions. The present invention provides for an organization, such as, Instinet®, that interfaces with customers of the Instinet FX Cross^{SM} as they input orders, and manages the crossing process. A second organization, such as, Citibank®, executes residual orders, extends credit and acts as counterparty to all executions, and confirms and settles all executions using both new and existing processes associated with, for example, the CitiFX® Benchmark. Accordingly, the present invention provides for partnering organizations to provide substantial value to the client.

Further embodiments of the present invention include a pre-market application where market players, for example, financial institutions and large corporations, may go and conduct their buys and sells. The present invention offsets these buys and sells against each other, providing a sort of a pre-market market. Therefore, in the examples presented above, the amounts are offset, that is, bought and sold against each other, without impacting the market.

Accordingly, an embodiment of the present invention collects all the buy and sell orders in each currency pair, and at a certain cut-off time, an algorithm is utilized that takes certain elements into account. Some of these elements include the amount to buy or sell; instructions given, such as the minimum amount needed to get crossed and what to do with any possible residual piece.

A further embodiment of the present invention is provided in the following example. In this example, there is a net buyer of a $1 billion against the yen and a seller of $900 million against the yen. The second participant would get his full order executed against the first, but the first participant would have $100 million, referred to as the residual. Assuming that they were the only two participants in the market, three trades would be executed: A buy of 900, a sell of 900 and, if the first investor wanted, the financial institution would go to the open market to buy $100 million.

Although $100 million appears to be a large amount, in the FX market, it is not. It is fairly simple to have it executed and it would not have much of an impact on the market. What actually went through the market is a $1 billion buy and $1 billion sell, and the market did not even know about the transaction. Accordingly, the present invention does a crossing of interests before anything is communicated to the FX market. The present invention uses an algorithm that is optimized against certain parameters, such as, how much people want to cross, what is the minimum, etc.

Referring again to the above example, to make it even more transparent, the $100 million that is left over, the residual, would be thrown into the benchmark process. This benchmark process is an important component to an embodiment of the present invention. A benchmark is a concept where, for example. Citibank®, on a 24-hour basis freezes market rates in a large number of currency pairs. This is done by obtaining feeds from major market contributors and purifying the data. A lot of corporations execute their foreign exchange on these benchmark fixings rather than going to the market in an attempt to obtain a better offer. This way, Citibank®, for example, has created a sort of official benchmark rate, which occurs about 11 times per 24-hour period.

Returning to the example, the residual may be executed at the 11A.M. EST Citibank® benchmark fixing. Therefore, there is an official rate for the residual $100 million. There may be other market players who also have interest in buying and selling, and it could very well be that even the $100 million could be offset against other buy and sell orders in the benchmark system that did not go through the Instinet FX Cross^{SM}. The $1 billion buyer now can get the entire $1 billion executed without market impact because only net amounts are communicated to the trading desk.

Although there are trades executed that show a participant buying of 900 million, another selling 1 billion, and another buying 100 million, there is nothing for the market desk to trade as a result of the 11A.M. benchmark. The market has not moved although 2 billion dollars was just exchanged.

A further embodiment of the present invention is a method for foreign exchange execution, comprising the steps of: receiving from a remote computer system a selection of a currency pair and a value date for a foreign exchange crossing process; receiving an amount specified in a buy or sell order for an anonymous entity; executing the order with minimal market impact; receiving residual instructions to execute residual portions of the order at a benchmark rate; undertaking a market risk associated with guaranteeing the benchmark rate; and providing the entity a report on how much of the order has been matched in the crossing process and how much was residual.

### BRIEF DESCRIPTION OF THE DRAWINGS

In the drawings:
FIG. 1 illustrates an architectural diagram of an embodiment of the present invention;
FIG. 2 illustrates customer functionalities of an embodiment of the present invention;
FIG. 3 illustrates customer (view only) functionalities of an embodiment of the present invention;
FIG. 4 illustrates Instinet® Trader functionalities of an embodiment of the present invention;
FIG. 5 illustrates Instinet® Admin functionalities of an embodiment of the present invention;
FIG. 6 illustrates CitiAdmin functionalities of an embodiment of the present invention;
FIG. 7 illustrates viewing functions of an embodiment of the present invention;
FIG. 8 illustrates a Current Orders by Currency screen of an embodiment of the present invention;
FIG. 9 illustrates an Import Orders screen of an embodiment of the present invention;
FIG. 10 illustrates an Order of Fields screen of an embodiment of the present invention;
FIG. 11 illustrates a List Entities screen of an embodiment of the present invention;
FIG. 12 illustrates a List Enterprises screen of an embodiment of the present invention;
FIG. 13 illustrates a Manual Order Entry screen of an embodiment of the present invention;
FIG. 14 illustrates a Change Password screen of an embodiment of the present invention;
FIG. 15 illustrates a List Users screen of an embodiment of the present invention;
FIG. 16 illustrates an OMS Setup screen of an embodiment of the present invention;
FIG. 17 illustrates a Login Page screen of an embodiment of the present invention;
FIG. 18 illustrates an Edit User screen of an embodiment of the present invention;
FIG. 19 illustrates an Edit Entity screen of an embodiment of the present invention;
FIG. 20 illustrates an Edit Enterprise screen of an embodiment of the present invention;
FIG. 21 illustrates a Fixing Schedule screen of an embodiment of the present invention;
FIG. 22 illustrates a Trade Details screen of an embodiment of the present invention;
FIG. 23 illustrates a Commission Summary screen of an embodiment of the present invention;
FIG. 24 illustrates an Orders by Enterprise screen of an embodiment of the present invention;
FIG. 25 illustrates Trades by Enterprise screen of an embodiment of the present invention;
FIG. 26 illustrates a Trades by Currency screen of an embodiment of the present invention;
FIG. 27 illustrates a Crossing Report screen of an embodiment of the present invention; and
FIG. 28 illustrates an Audit Report screen of an embodiment of the present invention.

### DETAILED DESCRIPTION

Reference will now be made in detail to embodiments of the invention, one or more examples of which are illustrated in the accompanying drawings. Each example is provided by way of explanation of the invention, not as a limitation of the invention. It will be apparent to those skilled in the art that various modifications and variations can be made in the present invention without departing from the scope or spirit of the invention. For instance, features illustrated or described as part of one embodiment can be used on another embodiment to yield a still further embodiment. Thus, it is intended that the present invention cover such modifications and variations that come within the scope of the appended claims and their equivalents.

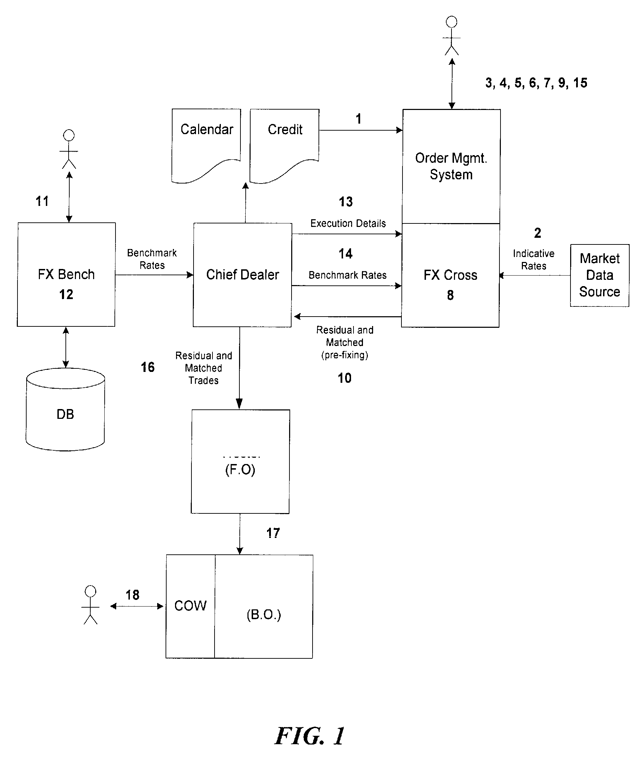

FIG. 1 is an architectural diagram of an embodiment of the present invention. The embodiment illustrates a process flow for the Instinet FX Cross^{SM}. This flow refers to one instance of the Instinet FX Cross^{SM}; multiple instances can occur within a business day.

An embodiment of the present invention is web-based, having two distinct pieces, the order management system (OMS) and the FX benchmark fixing. The order management system as the name suggests is a password protected website where an investor or user of the service can log in and enter his instructions, such as, what he wants to buy and sell, what his minimum requirements are, and what to do if the entire interest is unable to be crossed against another market player, or another financial institution pre-market.

As noted above, an embodiment of the present invention is built on a time line that culminates in the FX benchmark fixing. For example, in one embodiment, for the 11A.M. fixing, up till about 10:15 A.M., all the market players will have an idea of what they need to buy and sell in the market to cover either their buy or sell orders. About 45 minutes before the 11 A.M. fixing, orders and execution instructions are recorded in the database. This occurs off market. At 10:15 A.M. the ability to enter more orders ends.

In this embodiment, there are five minutes where corrections may be made to a customer's error. The Instinet FX Cross^{SM} takes all this data, which is basically buy and sell orders and instructions, and it attempts to obtain a perfect match on buy and sell orders based on that information.

There are three results in this embodiment: 1) Internally-crossed amounts, for example, when a fund manager or an institution, is a net buyer of nothing or net seller of nothing. This is an internal cross. All the fund manager has to do is move money, and a spread, or a commission, is not charged. Again, before the inventive system and methodology, those two orders would actually be considered two separate orders in the market, a buy and a sell order, and could move the market against investors in both cases. Therefore, a lot is paid in higher execution rates.

The other result is externally-crossed amounts. In this result, for example, there is a buyer and there is some other player in this market who is a seller. The buyer does not know the seller, and there is a small spread between the buyer's and seller's price.

The third result in this embodiment is the residual. Trade request are put into a the benchmark process. And again, chances are someone's residual amounts are crossed against other benchmark users that are not Instinet FX Cross^{SM} users. There might already be an interest that could match the residuals. In that case, the participants are subject to the spread that is charged with the established benchmark process. These trade requests all go into the benchmark process and when the clock hits 11 A.M., the benchmark process freezes the rates.

Therefore, these buys and sells are executed on the benchmark and the net (now there is a much smaller net that actually goes through) is communicated to the trading desk and is the only news that hits the market after all this crossing takes place. Those trades are then put up to the trading desk.

Referring again to FIG. 1, credit lines and holiday calendars for each currency supported by the product are sent to the Order Management System (OMS) 1. The Instinet FX Cross^{SM} receives an upload of indicate spot rates at periodic intervals 2. For each order saved, clients select, in one embodiment, the OMS entities, currency pair, buy or sell, currency amount, residual instructions, value date, and custom instructions for the minimum crossed amounts 3. The OMS performs validations on value dates and credit of each OMS entity selected 4. In an embodiment, after a cutoff time, clients cannot save or submit new orders 5. In a further embodiment, modifications to the order can be made by "checkers" after the cutoff time 6. A cutoff involving any further modifications then occurs 7. The cross is then run 8. Clients are then able to view a report of the OMS on how much of their order(s) has been matched in the crossing and how much was residual 9. In an embodiment, orders are sent, for example, as XML messages to Chief Dealer XML to be inputted into the Benchmark application's database table 10. In a further embodiment, after the orders are inputted into the Bench fixing table, a Citibank® administrator manually accepts each one in Chief Dealer 11. Fixing occurs and commissions are applied to the orders 12. After the fixing and application of forward points, executions are returned to clients manually in Chief Dealer 13. Benchmark rates are published to Chief Dealer and the OMS 14. Clients are able to view their execution reports via the OMS browser 15. In a further embodiment, executions with the Chief Dealer entity names is placed in a 'private and secure' warehouse that is not covered by a front office (F.O.) market maker 16. In a further embodiment, executions are sent with code names to the back office (B.O.), which confirms and settles each trade according to the customer's direction 17. In a further embodiment, clients can choose to confirm via CitiFx®'s Confirmation on the Web (COW) application, then executions are automatically displayed with client's real names attached to them 18.

### Manual Entry

In an embodiment of the present invention, clients submit orders to the OMS that are pre-allocated across funds. Another embodiment of the product supports initial entry of one block order and allocations or breakdowns to different funds post-execution.

At order-entry, clients are able to specify orders for one currency pair at a time. In one embodiment, all currencies will be traded against the US dollar. Other embodiments offer trading against currencies besides USD (e.g., EUR/JPY). The following is one example of currency pairs that are supported:
EUR/USD
GBP/USD
USD/CHF
USD/SEK
USD/NOK
USD/DKK
USD/JPY
USD/CAD
AUD/USD
NZD/USD
USD/HKD
USD/SGD

For a particular currency pair's orders, clients are able to specify the following for each order saved:
A. Account names - The Enterprise is determined when the client logs in, but the client selects an entity for each order he or she wishes to save or submit. Only entities valid for the Enterprise logged in is displayed.
   The entities that the client selects are OMS entities. One OMS entity name corresponds to one Chief Dealer entity, and one OMS enterprise name corresponds to one Chief Dealer enterprise name. When account information is set up in the OMS, a mapping of the Chief Dealer enterprises and entities to the OMS enterprises and entities takes place. The OMS Citibank® Administrator user controls these mappings.
B. Allocations - Post-execution funds breakdown are not supported in some embodiments. A user pre-allocates orders across specific entities. To do that, he or she specifies deal amounts allocated to each order and specify an entity for each order.
C. Currency Amounts - The client specifies the amount of currency he or she would like to buy or the amount of currency he or she would like to sell. US dollar amounts are not accepted, and the client is restricted from entering amounts in US dollars. The OMS provides indicative rates from CitiFX® in order for the client to calculate approximate currency amounts.
D. Custom Instructions for the Minimum Crossed Amounts- This instruction is optional. If a client wishes, he or she is able to specify a minimum threshold amount to be crossed for the larger of the total buy or sell amounts of all active orders entered for a currency pair. The minimum threshold for the smaller of the total buy or sell amounts is automatically entered at 100%. Clients are able to enter a minimum threshold as either a currency amount or a percentage. If a minimum threshold is entered but not met, then no orders are crossed or executed. The Crossing Instructions applies to all of the client's active orders entered for a currency pair and not to individual allocations.
   (i.e. Assume the total amount for all buy orders for EURUSD is 50,000,000 and the total amount for all sell orders for EURUSD is 30,000,000. The minimum threshold for the total sell amounts will automatically be 100% or 30,000,000. The default minimum threshold for the total buy amounts will be 100% or 50,000,000 as well, but the user is able to change this to an amount less than the total buy amount or 50,000,000.)
E. Residual Instructions -The client specifies one of the following options to handle residuals: (a) Send all residuals back and do not execute them, (b) Execute all residuals at the CitiFX® Benchmark, or (c) Minimum Trade Amount of currency. The Minimum Trade Amount entered for a currency indicates the minimum amount a user wants executed by any available means whether by crossing, residual execution at Citibank® or a combination of both. If the amount actually crossed exceeds the Minimum Trade Amount entered, no residual execution takes place. If the Minimum Trade Amount exceeds the amount actually crossed, residual execution takes place in an amount equal to the difference between the Minimum Trade Amount and the amount actually crossed. Specifying the last residual instruction, the Minimum Trade Amount, disables any Custom Instructions entered for the Minimum Crossed Amounts.
F. Value Date - Clients are able to roll out orders to any value date up to one year forward at the CitiFX® Benchmark Forward rate. It is made clear to the client that order crossing and forward execution are separate services; all orders are matched in the crossing process as if they were spot trades. Benchmark forward points are applied to orders after the Benchmark fixing.
G. Active/Inactive Flag Clients are able to save active and inactive orders. Active orders are submitted and executed in the cross and Benchmark fixing. In addition, only active orders are utilized in all calculations for total buy and sell amounts, residual instructions and crossing instructions. Inactive orders are executed but deleted from the system after the cross and Benchmark fixing occur.

### Modifying Orders

In an embodiment of the present invention, clients and Instinet® traders have the ability to enter the OMS and modify existing orders before the cutoff time for the Instinet FX Cross^{SM}. When modifying, users are able to alter any of the fields or instructions, but before the deal is saved and submitted again to the Instinet FX Cross^{SM}, the system treats it as a new order and re-checks all fields, specifically credit and the value date. The previous order that was modified is eliminated from the system and the next cross.

Note that the credit (need indicative rates to calculate) reduced for the original order is added back to the credit line for the enterprise before the modified order's amount can reduce the credit line.

Instinet® traders have a 'grace period,' e.g., 5 minutes (this time is configurable) to modify client orders via the OMS after the client cutoff time and before the cross. Note that Instinet® traders have the ability to see entities for multiple enterprises but not at the same time. Also, an audit trail of all modifications to orders exists.

### Deleting Orders

Clients and Instinet® traders have the ability to cancel existing orders within the OMS anytime before the client cutoff time for the cross. The system eliminates any deleted orders from the cross and increases the credit lines for their enterprises by the appropriate amounts (using the same indicative rates that were used to reduce the credit).

In an embodiment, Instinet® traders have a 'grace period,' e.g., 5 minutes (this time is configurable) in order to delete orders via the OMS after the client cutoff time and before the cross. An audit trail of deletions exist. Note that deleted orders are not technically removed from the database.

### Saving Orders

Clients can save active or inactive orders within the OMS anytime before the cross is run. However, in order to participate in the next cross, clients activate orders before the client cutoff time for the cross or get an Instinet® trader to agree to submit active orders on their behalf after the client cutoff time but before the cross. To save inactive orders, no credit checks are required, but credit is checked when saving active orders. Value dates are checked when either active or inactive orders are saved.

In a further embodiment, clients can open and edit saved orders anytime prior to the cross. Although, they can only submit saved or modified orders before the client cutoff time. Instinet® dealers have the ability to open, edit and submit clients' saved orders during the 'grace period,' e.g., 5 minutes (this time is configurable) after the cutoff time and before the cross.

### Validation

As orders are saved and submitted, in one embodiment, the OMS performs the following checks in real-time:
Credit - Credit is checked for active orders as described in the Credit section of this specification.
Value date - A check occurs for all active and inactive orders saved to ensure the value date is a valid business day for the currency pair selected.

If either of these validations fails, then the order is not saved and submitted into the Instinet FX Cross^{SM} system and the client is notified instantly via the interface of the appropriate error.

### Import Orders

In addition to manually entering orders, clients have the ability to import a comma separated value (.csv) file of multiple orders against the Instinet FX Cross^{SM}

After generating a file according to the file format discussed in the following Setup section, a user uploads it. Online status messages immediately appear after a file is uploaded indicating how many records were successfully processed or if any errors have occurred.

After a file has been successfully uploaded, all orders within the file are inactive. The user is able to view and edit these orders via the manual entry screens where he or she activates them. If orders already exist in the system for a currency pair that new orders have been imported for, the system indicates via the interface that these previous orders will be overwritten with the newly imported orders for that currency pair.

The system files formats, account names and value dates after each order in the file is imported. If an order's account or value date is incorrect within the file, then only that particular order is not uploaded. The rest of the orders within the file, however, are uploaded.

In an embodiment, credit is not checked when a file is imported. Credit is checked as usual when the user makes the imported orders active in the manual entry screen and saves them.

### Setup

The functionality below is similar to the current functionality in Chief Dealer for custom import for Benchmark orders. Users are able to customize the format of the file to import. Each order is a separate record within the imported file. In an embodiment, users can customize:
The order of the fields in a record.
The separator for each field in a record.
The format for the Value Date field.

### Customization

To customize the above aspects, the following selection criteria are present within the OMS browser interface in an embodiment of the present invention.

Separator - This appears as a drop down box with already defined acceptable values (, | # $).
Entity Name Column Number
Buy Currency Column Number
Sell Currency Column Number
Buy Amount Column Number
Sell Amount Column Number
Value Date Column Number
Value Date Format - A drop down box with predefined acceptable date formats (mm/dd/yyyy, mm-dd-yyyy, dd/mm/yyyy, dd.mm.yyyy, dd-mmm-yyyy, dd Mon yyyy).

### File Formats

In an embodiment, for each order within an upload file, the following fields are supplied and the following formats apply:
OMS Entity, Buy Currency, Sell Currency, Buy Amount, Sell Amount, Value Date
   - If the Buy Amount is not supplied then the Sell Amount is supplied. Only one of these fields is acceptable for each order.
   - The OMS Entity field matches the user's profile within the OMS. It corresponds to one valid Chief Dealer entity.
   - Buy Currency and Sell Currency are fields with 3 characters only representing the currencies ISO codes.
   - A decimal point and two decimal places are acceptable for all amount fields, except for Japanese yen amounts (where no decimal places are provided).
   - Value Date adheres to the format configured by the client in setup. Orders are submitted for crossing as spot, but orders can be rolled forward after the fixing as an additional service if clients supply a valid value date.

### Help

A Help menu is provided within the OMS identifying the import process and the acceptable file format.

### Export Orders

As defined later in this specification, users are able to generate various reports within the OMS to view orders, executions and audit trails. Users have the option to download these reports as comma separated value files (.csv).

### Credit

Since, for example, in an embodiment, Citibank® undertakes counterparty credit risk for all Instinet FX Cross^{SM} transactions, every cross customer must secure credit lines with Citibank®. The Instinet FX Cross^{SM} requires its own credit lines, distinct from regular FX lines within Citibank®. This ensures that no member of the CitiFX® front office at any time interfaces with Instinet FX Cross^{SM} credit issues in a way that compromises anonymity in execution.

Credit lines are based on creditworthiness, expected volume and currency pairs and tenors to be transacted. Customers who do not have an existing credit relationship with Citibank® need to go through Citibank®'s normal credit process.

As active trades are entered into the OMS, the available credit lines are reduced by the appropriate USD amount; the system requires indicative rates to calculate the USD amount since clients will be entering the currency amount for each order. When these orders are booked into, for example, Trestel, a Citibank® FX trading system, the same credit lines in Trestel will automatically be reduced. Credit lines are not reduced for inactive orders in the OMS.

If clients do not opt for the residual program, credit is increased back after the cross runs for residual amounts sent back to clients. The same indicative rates used to decrease the credit are used to increase it back. Credit is also increased for orders where minimum crossed requirements were not met. The process of increasing credit after a cross does not need to occur before trades are sent to Chief Dealer and Benchmark, but it may occur immediately afterwards.

During manual order entry, a fund manager is immediately alerted if the allocated credit lines are exceeded for an active order, and the order is rejected upon saving. Credit is not checked at the time of importing orders; the credit for imported orders is checked when the user attempts to make these orders active in the manual order entry screen. See the Daily Uploads and Credit section for how credit is uploaded into the OMS.

### Daily Uploads

At the beginning of each business day, CitiFX® supplies the OMS with the credit lines. A holiday calendar is also supplied to indicate value dates. If these messages do not reach the OMS, the Instinet FX Cross^{SM} is not disabled. Clients that have changed their credit lines are the only ones affected. Credit lines in the OMS are in effect until a new upload is sent from CitiFX®. In an embodiment, the following information will be sent from CitiFX® to the OMS via the XML protocol.

### Administrative Functionality

In an embodiment, Instinet®'s trading desk and a Citibank® administrator use the same OMS interface as clients but have administrative capabilities to which clients do not have rights. The following sections highlight the administrative functionality that these individuals have and their respective roles.

### Update Orders After Cutoff

If active orders are submitted through the OMS browser and pass the value date and credit checks, they are considered accepted by Instinet®'s trading desk. Therefore traders do not have to manually accept each order. However, if a client needs to change or cancel an order before the cross has been executed and the client cutoff time has passed, an Instinet trader with administrative permission does this within the OMS. Instinet® traders have the capability to open their clients' saved orders and submit them on their behalf. Note, in this case, value date and credit validations will occur again.

### Handle Credit Exceptions

In an embodiment, when credit fails in the OMS, the client can call the Instinet® trading desk for assistance. The Instinct® trader contacts a CitiFX® administrator, who will then in turn contact Citibank®'s Credit Delivery Unit (CDU). CDU does not have any direct customer contact itself. If the order is approved by the CDU, then the CitiFX® administrator manually overrides the client's credit line within the OMS for the current day only (An audit trail for exception processing exists). The CitiFX® administrator informs the Instinet® trader of the resolution.

### Setup Accounts

Accounts are set up in all necessary systems for each entity for which a client wishes to trade in the Instinet FX Cross^{SM}. After credit is secured for a customer, the following happens in an embodiment of the present invention:
- The Citibank® middle office and back office works together to open the new entity account in Trestel and assign a unique base number to it. This base number ties the entity name to the customer's credit information and settlement instructions.
- A CitiFX® eCommerce administrator sets up a Chief Dealer entity (and enterprise if necessary) that is mapped to the correct Trestel base number. (This Chief Dealer enterprise and entity will not be what the client sees in the OMS; coded names will be used in Chief Dealer to preserve the client's anonymity.)
- A CitiFX® administrator then sets up the OMS entity (and enterprise if not already set up) in the OMS. They have the ability in the OMS to map this entity (and its corresponding enterprise if not already done) with the coded entity (and enterprise) name set up in Chief Dealer.

### Create OMS User Accounts

CitiFX® administrators have the ability to create customer and customer (read-only) users in the OMS. While Instinet® administrators have the ability to create only user accounts for Instinet® traders and other Instinet® administrators.

### Reset Passwords

In an embodiment, clients either contact an Instinct® trader or are able to submit an email in the event that they forget their password and need to reset it in the OMS. If the client contacts an Instinet® Trader, the Instinet® trader contacts a CitiFX® administrator so he or she can reset the password for the customer in the OMS. Emails to reset passwords are sent directly to the CitiFX® administrator.

### Reset Cutoff Times

In an embodiment, Citibank® administrators have the ability in the OMS to reset the cutoff times before a fixing for clients and for Instinet® traders. For example, the latest possible cutoff for clients is T - 15 minutes. The cutoff for Instinet® traders is less than or equal to the cutoff for clients.

### Activate Fixings

In an embodiment, Citibank® administrators have the ability to select in the OMS which Benchmark fixings they would like to run the cross.

### Change Crossing Algorithm Logic

Instinet® administrators have the ability to change the crossing algorithm logic to just run for internal crosses only. As a default and standard, the cross does internal and external crosses.

### Instinet FX Cross^{SM} Cross Algorithm

Instinet®, for example, creates the algorithm for the cross and manages the crossing process within the OMS.

### Indicative Spot Rates

For the purposes of credit validation (at the time of order submission), Citibank® provides an indicative live FX spot rate for the supported currency pairs. Citibank® provides these rates on the manual entry screen every 15 minutes (This time is configurable.).

These indicative rates are also present within the OMS browser for clients to calculate their order amounts in currency terms. Very little overhead exists in the system to provide indicative rates approximately every 15 minutes in the OMS.

### Trade Requests

After the cross successfully matches all orders where all custom instructions for Minimum Crossed Amounts have been met, the cross generates the XML trade requests and sends them to Chief Dealer. The FXML Benchmark standard is utilized when generating these messages. However, alternatives to XML messaging are acceptable as long as trade details reach the Benchmark before the multilateral netting process must begin.

When generating these XML messages, the cross uses the mapping of OMS enterprises and entities to Chief Dealer enterprises and entities to make sure that the XML messages contain Chief Dealer enterprises and entities.

### Trade Executions

In an embodiment, after Benchmark fixings, Chief Dealer sends to the Instinet FX Cross^{SM} XML executions with the order details. The Instinet FX Cross^{SM} interprets these messages, apply the OMS enterprises and entities (since the Chief Dealer enterprises and entities are present within the messages) and then displays the execution reports within the OMS.

### CitiFX® Benchmark

All orders are executed against the CitiFX® Benchmark with a commission. If a customer wishes, Citibank® also guarantees execution of residual amounts (amounts that were not completely matched via the cross) at the Benchmark rate. In an embodiment, customers must state if they would like residuals to be executed or not at the time they submit the orders via the Residual Instructions.

In one embodiment, two benchmark fixings are utilized: 4:00 PM LDN (11:00 AM NY) fixing and 3:00 PM NY fixing. In other embodiments, additional crosses occur at other times throughout the day.

After each CitiFX® Benchmark fixing, Citibank® begins to return executions to clients via the OMS. In the meantime, CitiFX® sends the Benchmark rates to the OMS approximately 5 minutes after each fixing. The OMS publishes these rates within the browser for clients to view Benchmark rates are sent via the XML protocol.

### Anonymity

Anonymity during execution is a selling point for the Instinet FX Crosssm product. Client orders associated with this product are rendered 'invisible' to the Citibank® trading desk. If these orders need to pass through the desk, they do so with anonymity. To facilitate this anonymity, in an embodiment, XML trade requests from the Instinet FX Cross^{SM} first will utilize predetermined distinct Chief Dealer enterprises and entities to submit orders. These Chief Dealer enterprises and entities do not include the clients' names.

These executions are transferred from the private and secure warehouse (see next section) to the correct market maker's warehouse under an internal dummy account name. Because all Instinet FX Cross^{SM} trades appear under internal dummy account names per spot and currency pair, it is impossible to associate any individual trade with a customer identity.

### Private and Secure Warehouse

A new warehouse is generated for this initiative where all orders are booked initially. To successfully book from Chief Dealer into this warehouse, an additional Trading Unit is defined within Chief Dealer. The default warehouse defined for this Trading Unit is a private and secure warehouse. No currency warehouses is defined. The new Trading Unit defined in Chief Dealer is also defined within the GTMS Router.

### Example with Internal, External and Residual deals with Forward Date

| | | |
|---|---|---|
| (All deals are from Citibank®'s point of view.) | | |
| Customers | Customer 1A & 1B | |
| | Customer 2 | |
| EURUSD bench fixing | 0.9900 | |
| Dec 15 forward fixing | -0.0015/-0.0012 | |
| Commission Rates | Internally matched | 0.0000 |
| | Externally matched | 0.0001 |
| | Residual | 0.0002 |
| Deals | | |

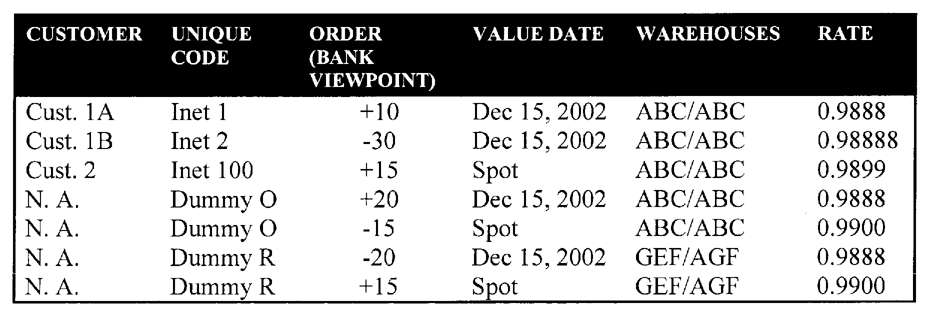

The ABC warehouse has no net position at the end of this process, because the aggregation of Dummy O deals is equal to the customer deals. The Dummy R deals exactly reflect the risk positions and go into the risk warehouses.

In the chart above, the matching process is:

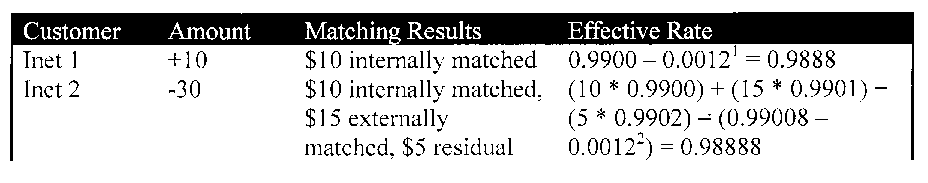

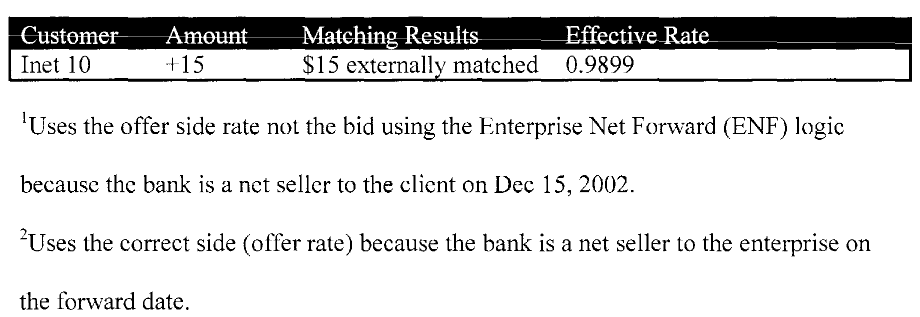

Entry in ABC warehouse:

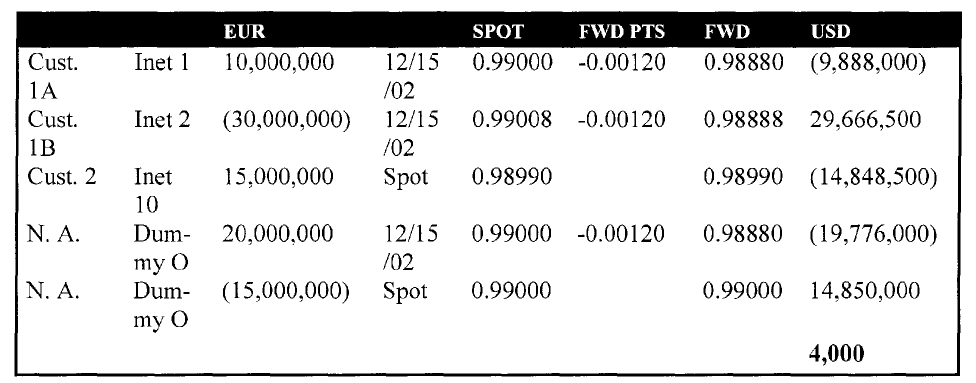

The balance in the warehouse ($4,000) represents the net profit (commission) in the warehouse.

Calculation of Rate for Cust. 1B $30mm Deal:

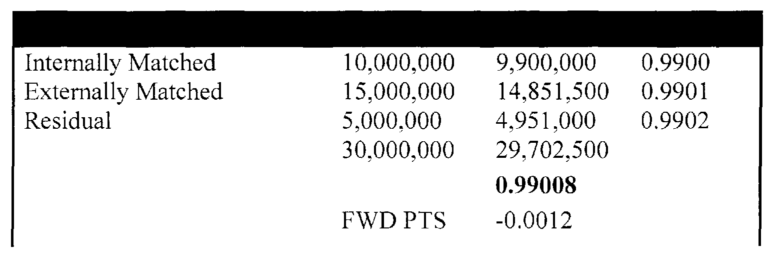

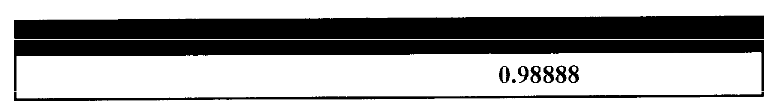

Example with Internal, External and Residual deals with Forward Date on Emerging Market Currency

(All deals are from Citibank®'s point of view.)

| | |
|---|---|
| Customers | Customer 3A |
| | Customer 3B |
| | Customer 4 |
| USDSGD bench fixing | 1.8005 |
| USDSGD bench cover | 1.8000/1.8010 |
| Dec 15 forward fixing | -0.0030/-0.0025 |
| Nov 30 forward fixing | -0.0020/-0.0017 |
| Customer spreads | Internally matched 0.0000 |
| | Externally matched 0.0005 |
| | Residual 0.0008 |

Assume all SGD deals (spot and forward) go into the GEX warehouse.

### Deals:

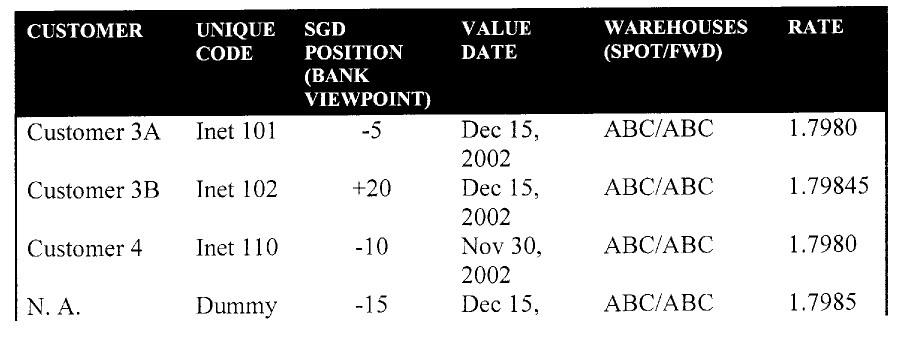

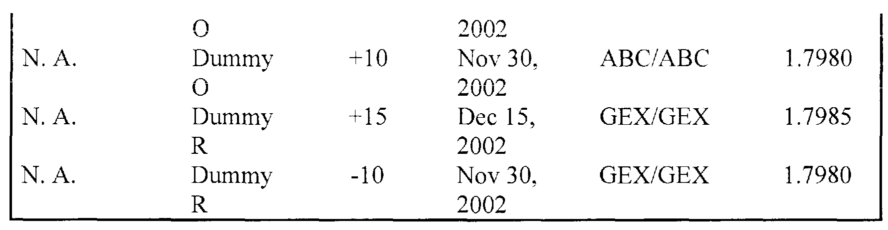

### Entry in ABC warehouse:

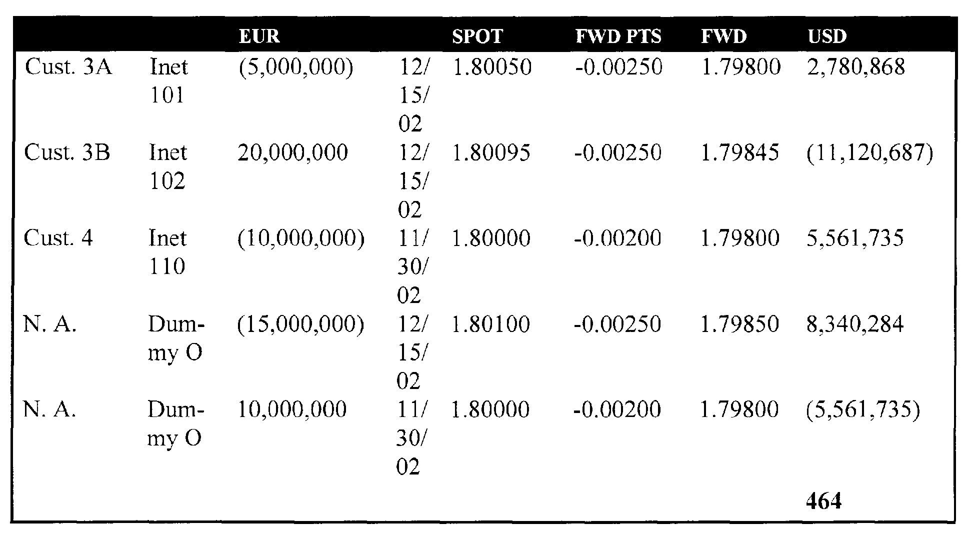

The balance in the warehouse ($464) represents the net profit (commission) in the warehouse.

Calculation of Rate for Cust. 3B $20mm Deal:

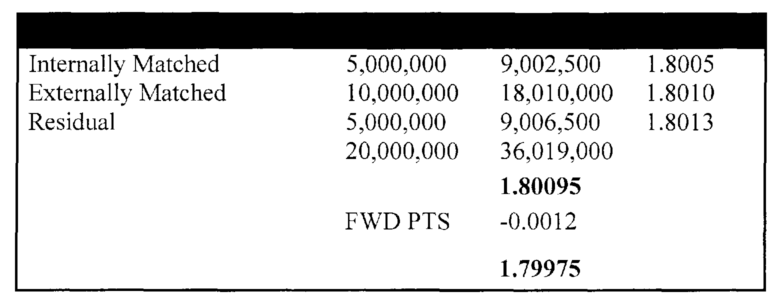

### Forward Benchmark

As an additional service, clients roll forward executed orders at the CitiFX® Forward Benchmark to any value date out to, for example, one year. Clients who wish to submit an order for the Forward Benchmark, enters a valid value date when entering the order.

After the Benchmark fixing, the forward points are applied to these orders. The XML order requests sent from the OMS to Chief Dealer/Benchmark, and the executions sent back to the OMS and to Trestel reflect the correct value date for these orders.

### Pricing Strategy

In an embodiment of the present invention, clients are charged a commission based on pre-agreed rates. These rates are set by currency group and by amount tranches. They provide the ability to differentiate rates for matched and residual executions.

In an embodiment, internal customers in both Citibank® and Instinet® are allowed to use the Instinet FX Cross^{SM} at no commission with the condition that they are rated as second priority clients in the matching algorithm. This means that their deals are not matched if it means diluting a paying customer in the cross.

### Notifications and Reports: Matched and Residuals Amounts

Clients are able to generate a report in the OMS on their orders' exact matched and residual amounts. These reports are available immediately following the execution of the cross and before each fixing.

### Real-time Status Messages

Upon submitting an active order in the OMS, clients are immediately notified (1) if the trade amount violates their current level of credit or (2) if a value date entry is not a valid business day for the currency pair.

### Execution Reports

In an embodiment of the present invention, at approximately T + 15 minutes after each Benchmark fixing, execution reports are available to clients via the OMS. Clients are able to generate execution reports at the enterprise level. Execution reports show the OMS entities as opposed to the Chief Dealer entities used during execution. The OMS controls the mapping of names. Also, there is a distinction in execution reports between the matched and residual portions for each order.

In an embodiment, the following information is displayed within execution reports: OMS entity name; Trade date (The OMS shows the same history as Chief Dealer.); Fixing date; Fixing; Currency pair; Amount of currency bought or sold; Spot rate and forward points (if applicable), All In Rate; Corresponding USD amount; Value date; and Amount matched.

Clients of the OMS have the ability to download execution reports as comma separated value files (.csv) and are able to obtain historical reports via the OMS.

### Submitted Transactions

Customers are able (at either the enterprise or entity level) from the OMS to view orders that have already been submitted to the Instinet FX Cross^{SM} but are waiting to be executed. The following information is displayed in an embodiment of the present invention: OMS entity name; Trade date (The OMS only displays the orders submitted since the last FX Cross.); Currency pair; Amount of currency to be bought or sold; Value date; Custom Instructions for Minimum Crossed Amounts; and Residual Instructions.

### Confirmations and Settlements

The counterparty, in one embodiment, on confirmations is always Citibank® and confirmation reports show the OMS entities as opposed to the Chief Dealer ones.

### Client Deployment Model

One preferred model is that no software is downloaded to run on the clients' machines.

### Security: Encryption, Authentication, Message Checking

No encryption requirements beyond what is already satisfied by https are needed. In one embodiment, user authentication is provided by Citibank®. The design of this functionality is independent of who is doing the authentication.

### Reliability/Maintainability/Scalability

In an embodiment of the present invention, the order management system is available to clients 24X5. Citibank® supports this timeframe with its Chief Dealer and Benchmark products

If for any reason these interfaces are not available, clients are able to call Instinet®'s trade desk or call center to get the required information or to effect the trade(s). Instinet® will then contact Citibank®'s call center if needed.

In an embodiment, the system is able to support 100 users participating in two crossings/Benchmark. In another embodiment, the system is able to concurrently support 2000 users. Some customers may input several hundred individual orders for one cross. The system load for both order entry and reporting accommodates the demands of all clients within small windows of time around the cross.

In an embodiment of the present invention, the system is scalable to cover all crosses in the future up to 24 in a day and support a global user base of up to 10,000 users. The system is able to sustain server/communication/power outages without impact to either the Instinet FX Cross^{SM} or CitiFX® Benchmark systems.

### Login

Clients use a single login/password to gain access to the Instinet FX Cross^{SM} via the OMS. The OMS supports the following login features: Automatic password expiration; Ability to reset passwords; Restrictions on setting passwords (min. number of characters, etc.); and Administrative permissions.

### User Types

In accordance with an embodiment of the present invention, there are a total of five types of end users for the application: Customer, Customer (view-only), Instinet® Admin, Instinet® Trader and CitiAdmin. Each has a different set of functionalities. Examples are listed below User type is identified by user name and password when logged on to the OMS.
Customer
   - Enter/edit orders
   - Import orders/setup
   - View reports
   - Change password for self
Customer (View only)
   - View reports
   - Change password for self
Instinet® Trader
   - Act for customer (Enter/edit customer orders -extra five minutes to edit; view reports, import orders/setup)
   - View Trader's report
   - View Audit Trail
   - Change password for self, reset for a customer
Instinet® Admin
   - Create Instinet® Admin Login/setup
   - Create Instinet® Trader Login/setup
   - View Audit Trail
   - Change password for self and reset for other Instinet® admins, traders
CitiAdmin
   - Create Customer Enterprise/Entity relationship
   - Create customer login/setup
   - Create CitiAdmin Login/setup
   - Change credit limit for Enterprise
   - View Audit Trail
   - Change password for self and reset for other CitiAdmins
   - Create Enterprise/Entities

### Customer

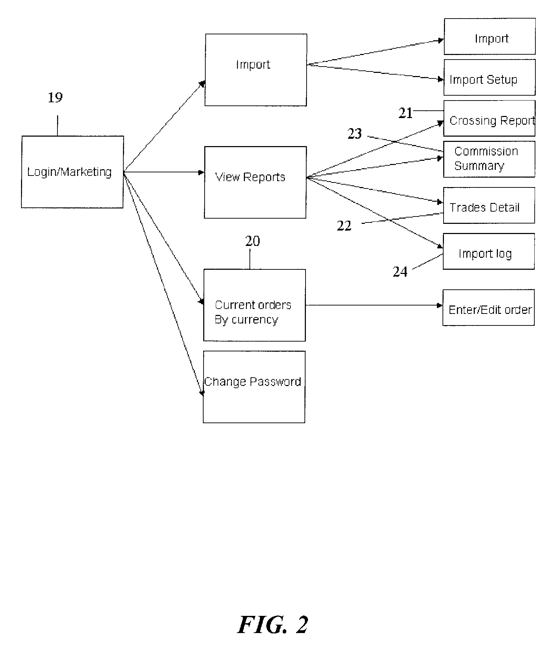

Referring now to the embodiment shown in FIG. 2. Customers are the ultimate end users who provide liquidity to Instinet FX Cross^{SM}. Each user is related to an enterprise, and one enterprise can have many users. They can act for any entity under the same enterprise. Their enterprise /entity relation and their user profile (login, password, contact) information is set up by a CitiAdmin.

### Current orders by currency

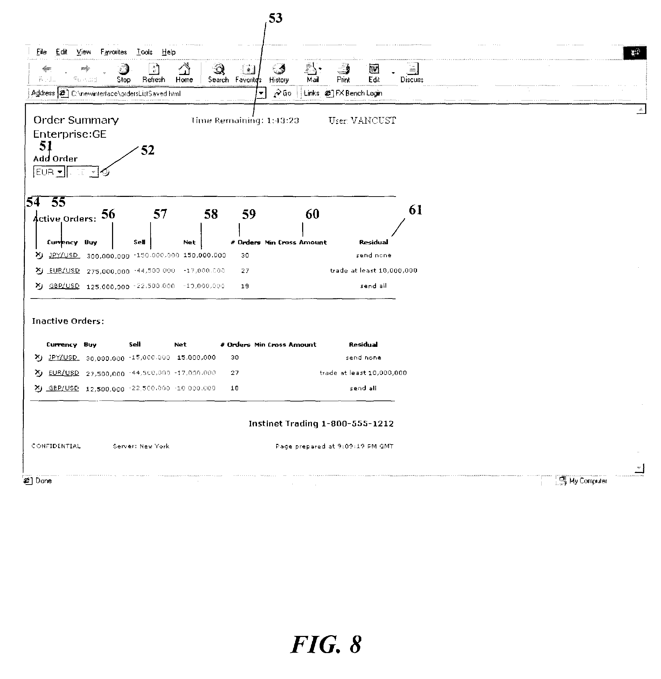

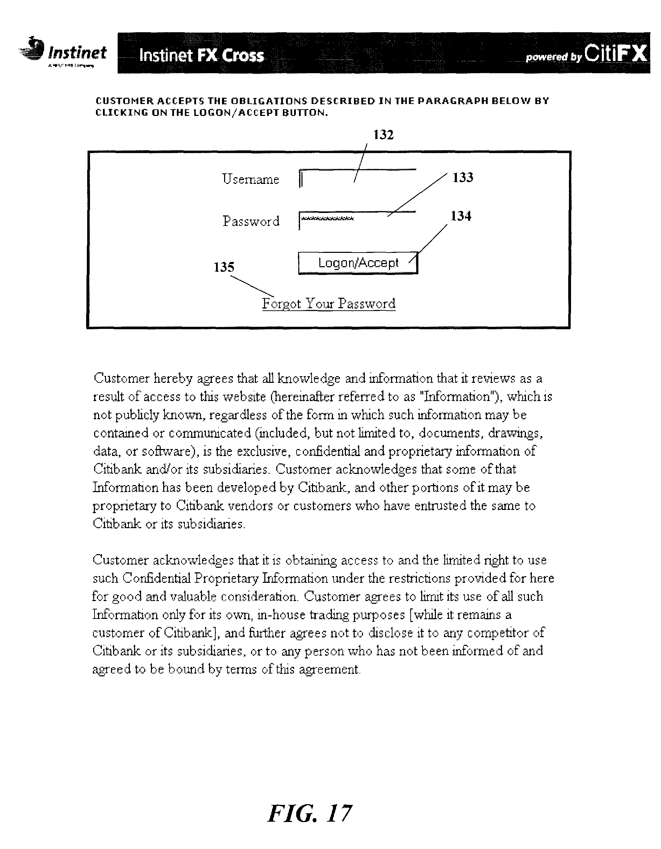

In an embodiment of the present invention, once they have logged into the Login Page 19 (FIG. 17), they will see a "Current order by currency" page 20 (FIG. 8), here they have the option to either add new orders, or to edit saved orders 45 minutes before fixings.

### View Reports

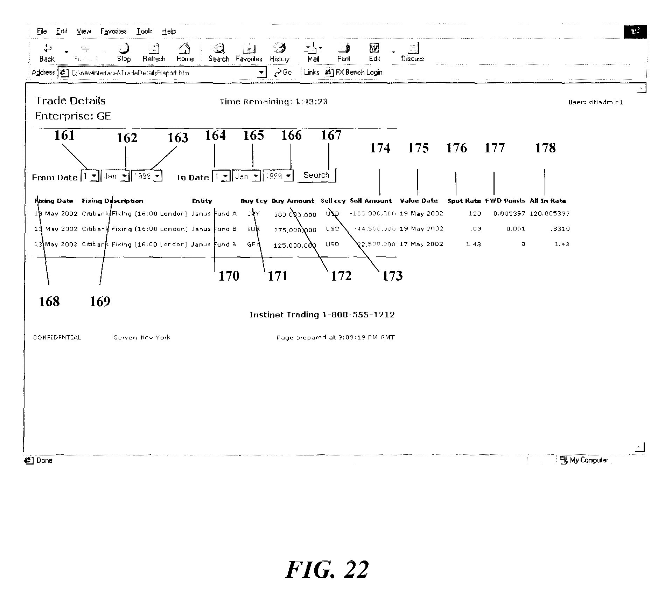

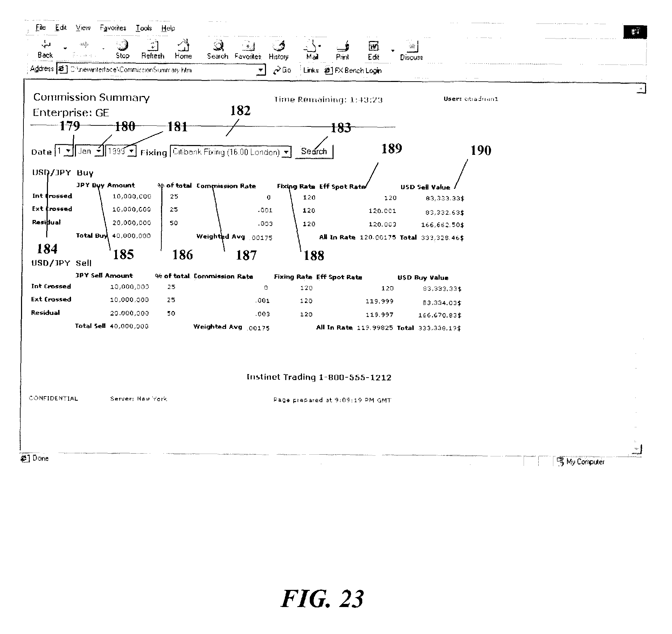

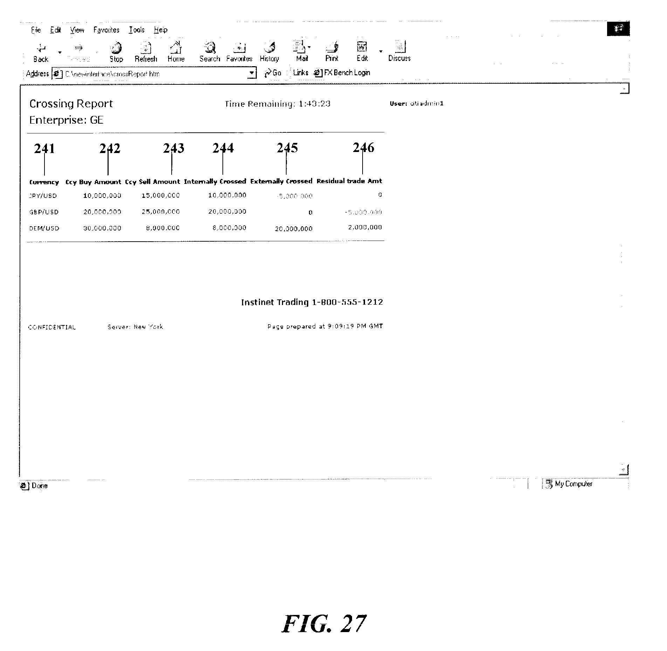

Different reports as part of various embodiments of the present invention are available to Customers. Besides the "Current order by currency" report 20 (FIG. 8), they can also view the "Crossing Report" 21 (FIG. 27) a few minutes after the cut off time and; "Trade Detail" 22 (FIG. 22) after the orders have become trades at an entity level (about 10 min after fixing); "Commission Summary Report" 23 (FIG. 23) will break up total buys/sells within the enterprise with their corresponding commissions by internal/externally crossed and residual amount. An "Import Log" is also provided 24 (see below).

### Order Entry

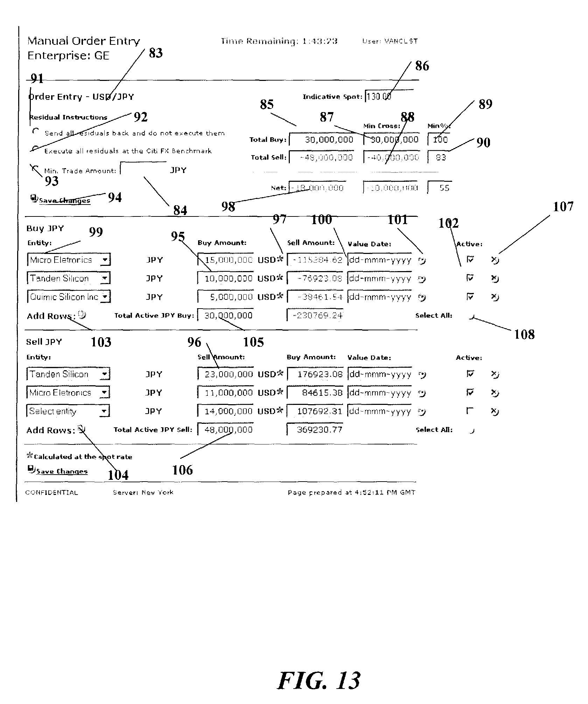

In addition to the reports above the Customer has the ability to enter orders. The following topics further explain the process of entering orders. See Manual Order Entry (FIG. 13)

### Displayed Amount

In an embodiment of the present invention, as the customer enters the buy/sell amount, the OMS automatically displays the aggregated active buy/sell amount, crossed amount and net amount at the top of the screen. Total sell has a negative sign and the net could have a negative sign in front of the amount. In this embodiment, these fields are not editable by user.

### Minimum Crossed Amount Instruction

In an embodiment of the present invention, the user can specify the minimum crossed amount for the larger of either the buy or sell order in currency or percentage terms, but cannot specify both. Related fields dynamically change depending on user input. (The internally crossed amount will equal the total smaller order amount). If the minimum cross amount is greater than the original amount, a warning appears stating, " Minimum cross amount cannot be greater than the original amount." Min % fields are in 3 digits format. If user enters a value greater than 100, a warning says "Value cannot be greater than 100."

### Residual Instruction

In an embodiment of the present invention, the client specifies one of the following options to handle residuals: (a) Send all residuals back to the client and do not execute them, (b) Execute all residuals at the CitiFX® Benchmark, (c) Specify a Min trade amount, which will disable the Min cross amount instruction. This amount is the absolute value of the amount the customer wants to trade. This value cannot be greater than the original order quantity, or equal to zero. Otherwise a red warning message will say "Amount should not exceed original amount." or "Amount should not equal zero."

### Import

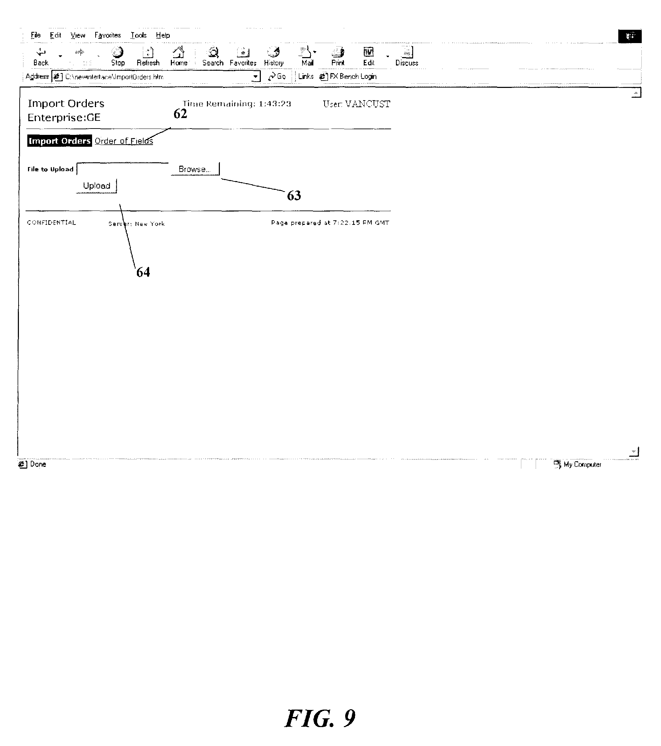

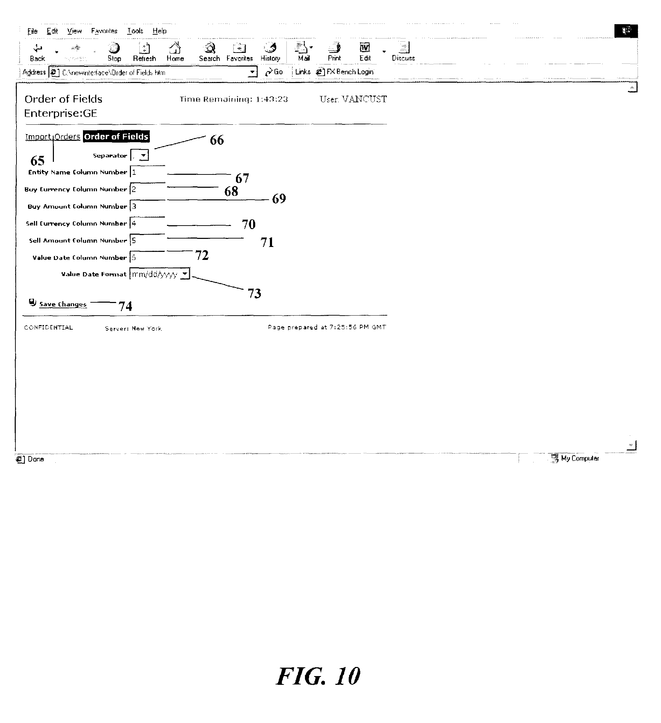

In an embodiment of the present invention, customers can also upload blocks of orders by choosing the "Import" option. The format of the uploadable orders is customizable under "Import setup." See Import Orders (FIG. 9); Order Of Fields Screen (FIG. 10)

The functionality is similar to the current functionality in Chief Dealer for custom import for Benchmark orders. Users are able to customize the format of the file to import. Each order is a separate record within the imported file.

In an embodiment, users can customize: The order of the fields in a record; the separator for each field in a record; and the format for the value date field.

To customize the above aspects, in an embodiment of the present invention, the following selection criteria are present within the OMS browser interface: Separator - This appears as a drop down box with already defined acceptable values (, #$; ~); Entity Column Number; Buy Currency Column Number; Sell Currency Column Number; Buy Currency Amount Column Number; Sell Currency Amount Column Number; Value Date Column Number; and Value Date Format - A drop down box with predefined acceptable date formats. Value date limit is one year, and a blank value date is Spot. (m/d/yy, mm/dd/yy, d/m/yy, dd/mm/yy, d-mmm-yy, dd-mmm-yy, mmmm d, yyyy).

In an embodiment of the present invention, the following exceptions occur when inputting trade records:
- Negative Sign on Buy Side: This is an error. Ignore negative signs on sell side.
- Invalid Separator: The column separator saved for the user, does not match with that found in the file.
- Invalid/Missing Entity: The entity specified in the file should be available for the user under his enterprise.
- Invalid/Missing Buy/Sell Currency: Both Buy and Sell currency should be specified and should be one of the valid currency codes supported by Instinet FX Cross^{SM}. In this embodiment, one side should always be USD and amount should be entered for currency.
- Invalid Buy/Sell Amount: The amounts specified should be valid amounts:

they cannot be negative if a buy, and the amount cannot have decimals greater than that supported by the currency.
   - Cannot specify both Buy and Sell amounts. Either a buy or a sell amount should be specified.
   - Value Date missing: The imported record must have a value date.
   - Invalid Value date format: The value date should be as per the format specified by the user.
   - Invalid Value Date: Value date can not be in the past/today/weekend/holiday. Value date must be less than or equal to one year.
   - Can not specify a tenor in the place of the value date.

### Customer (View Only)

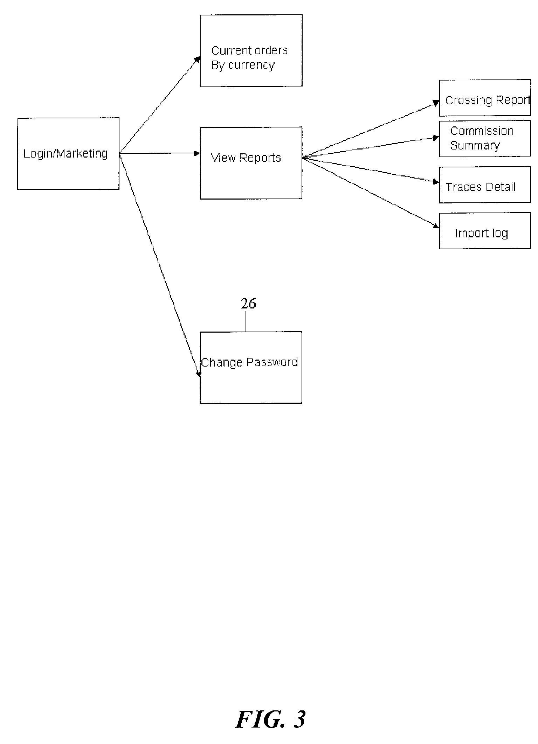

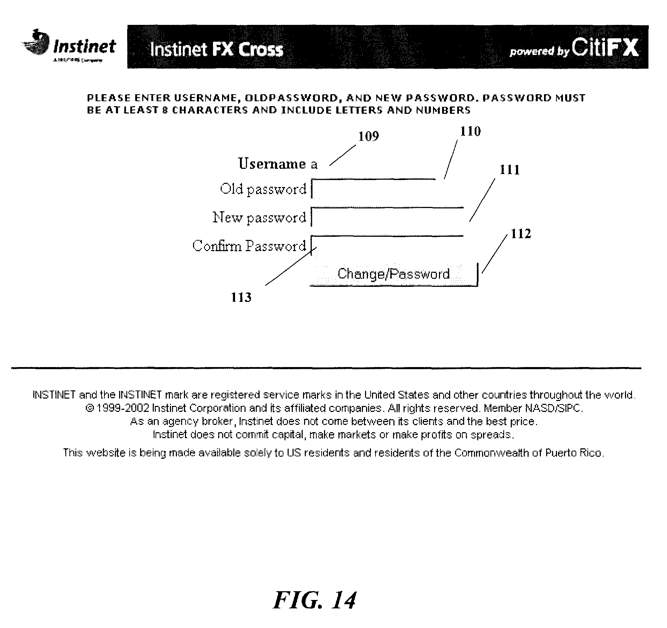

Referring now to FIG. 3, the read only customer is able to view all of the reports viewable by customer. Change Password 26 is shown in FIG. 14.

### Instinet® Trader

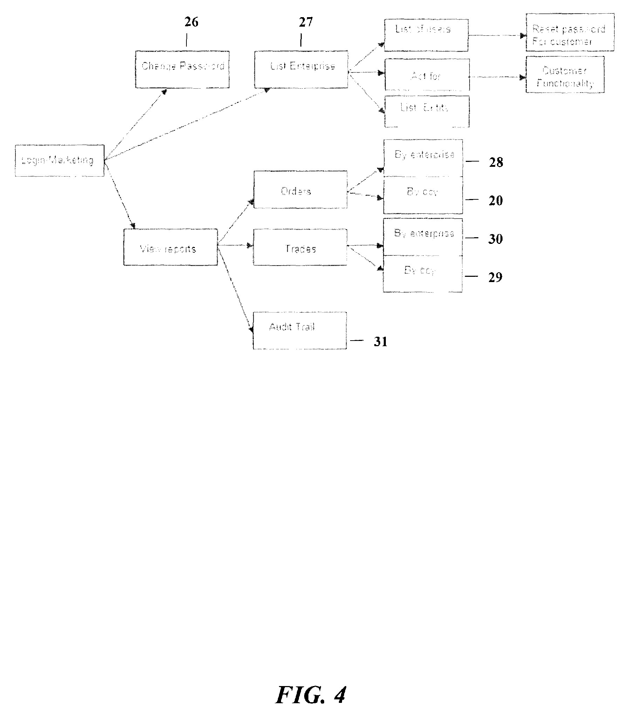

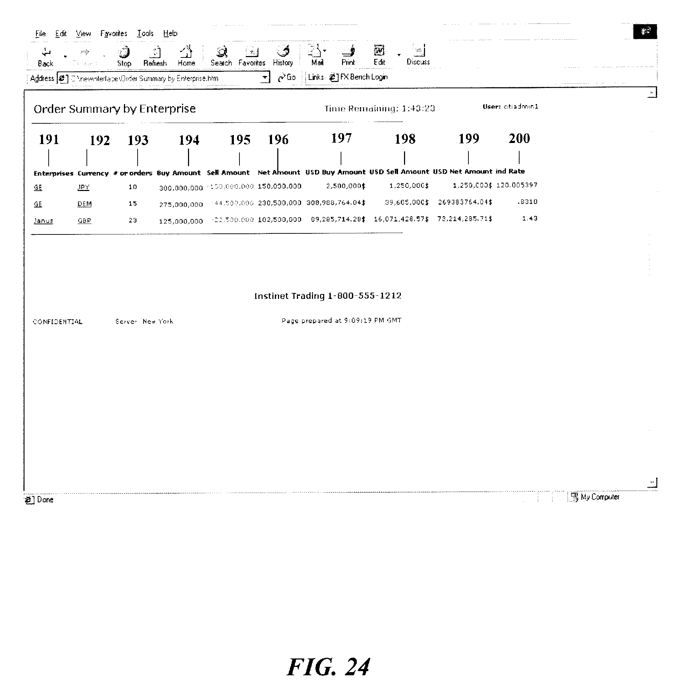

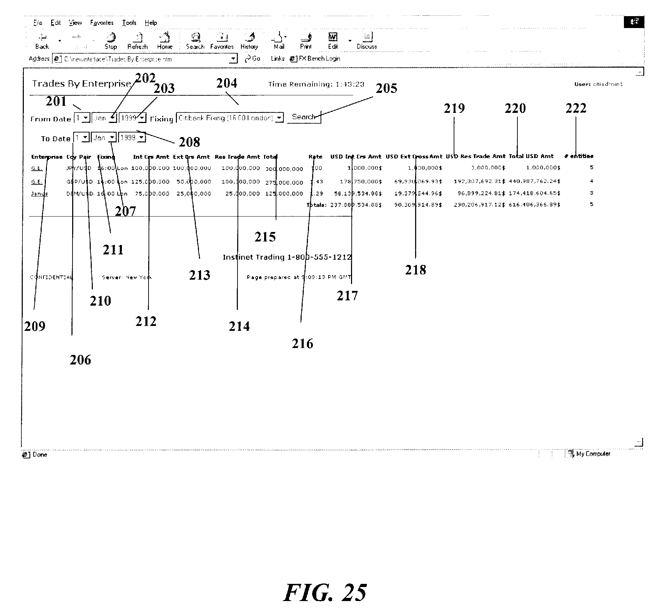

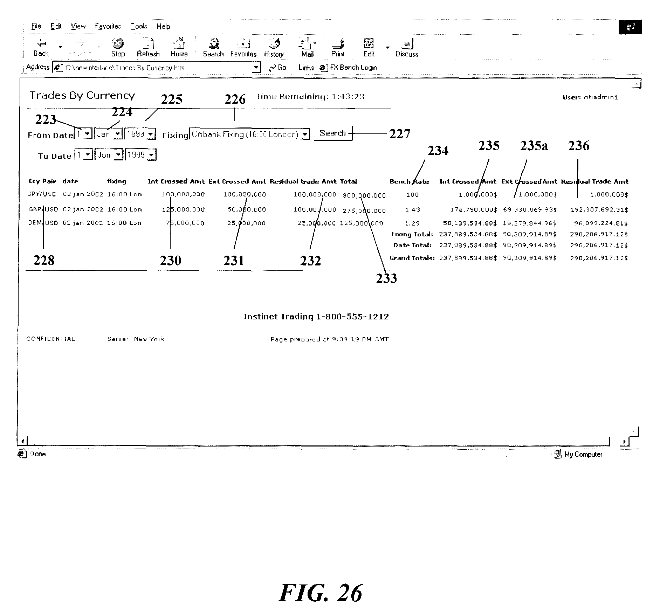

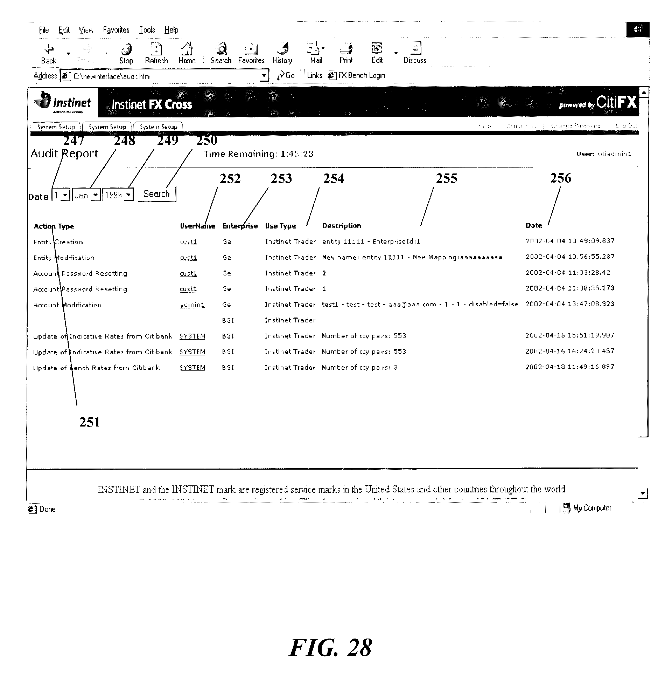

Referring now to FIG. 4, Trader selects which Enterprise he /she wants to act for first. See List Enterprises 27 (FIG. 13). Viewing of reports include: Orders by currency 20 (FIG. 8); Orders by enterprise 28 (FIG. 24); Trades by Currency 29 (FIG. 26); Trades by enterprise 30 (FIG. 25); Audit Report 31 (FIG. 28)

### Instinet® Admin

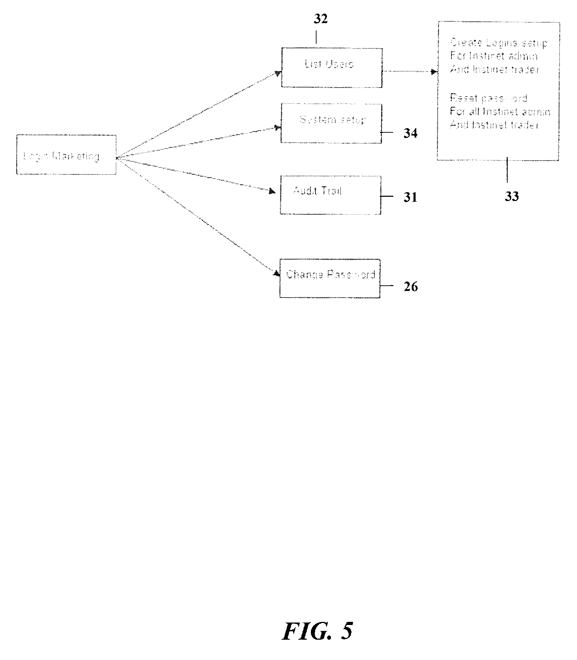

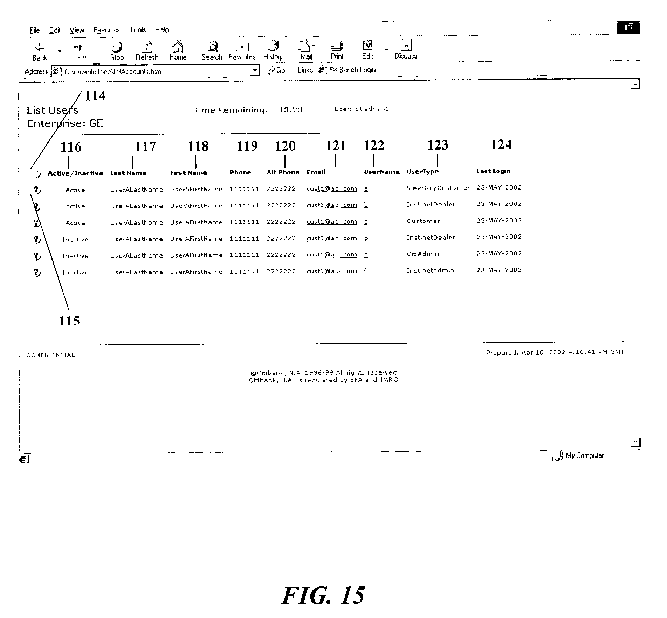

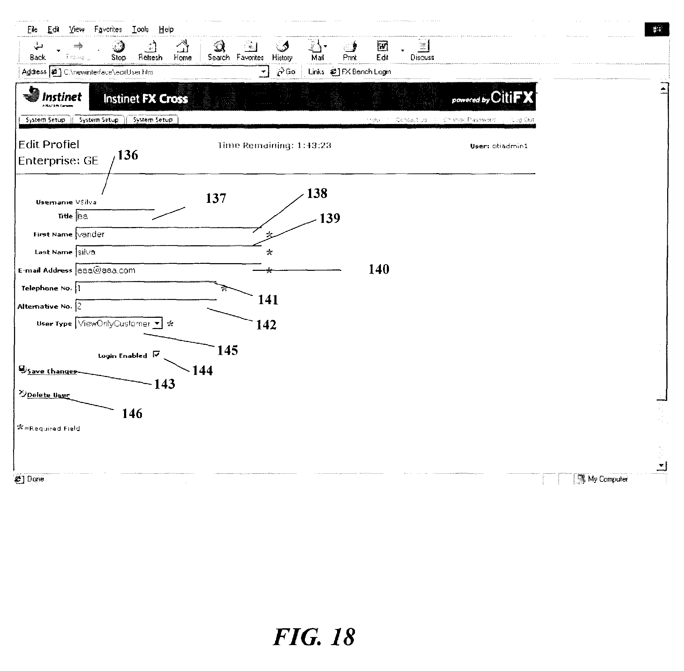

Referring now to FIG. 5, Instinet® Admin has the ability to create a user login for an Instinet® Admin and Trader. When the appropriate user type is selected, rights are given to the user to perform their functionalities. The Instinet® Admin can also reset password for all Instinet® Traders and Admins. See Edit User 33 (FIG. 18) and List Users 32 (FIG. 15)

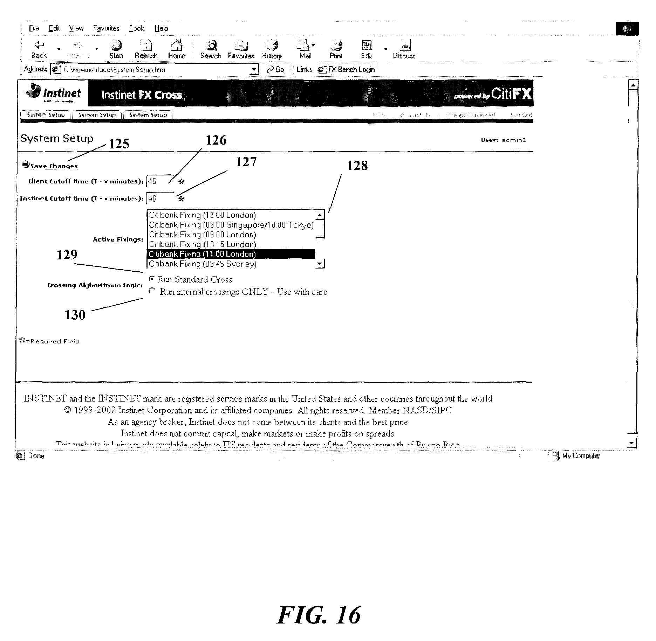

Citibank® Admin has the ability to change the cutoff time for customers and for Instinet® Traders. In one embodiment, the default is 45 minutes before a fixing for a customer and 40 minutes for an Instinet® Trader. In case of a technical error, the second crossing algorithm is applied, if the first one fails. Synchronization link synchronizes all active fixings from Chief Dealer. See OMS Setup 34 (FIG. 16).

### CitiAdmin

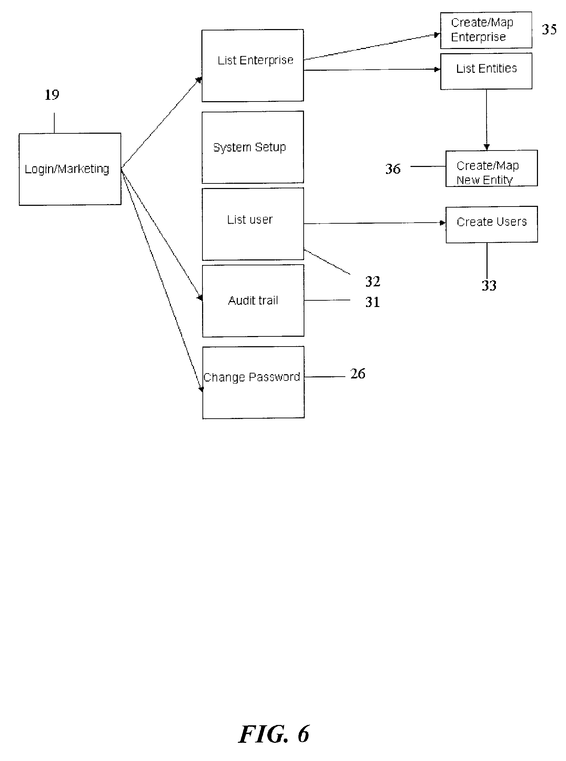

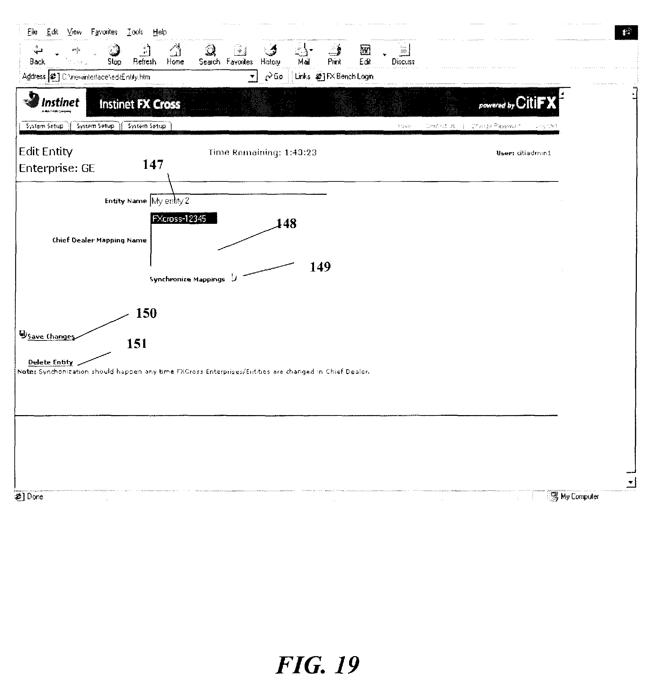

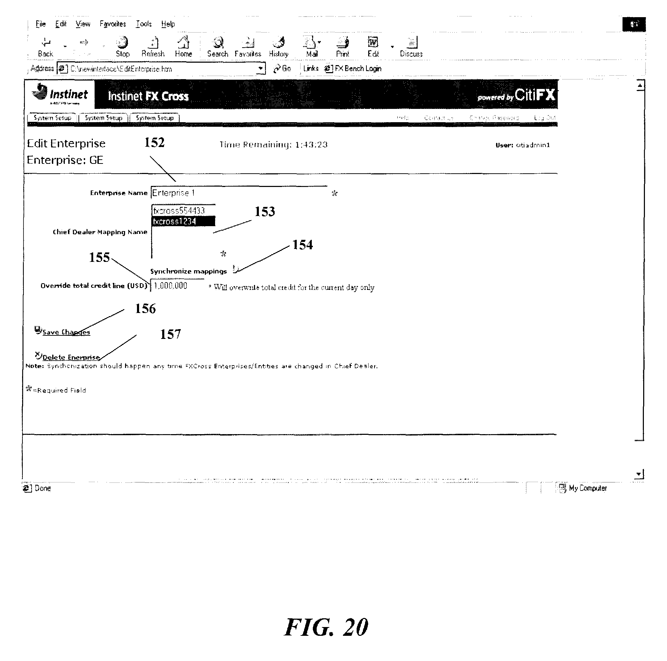

FIG. 6. illustrates the CitiAdmin functionalities of an embodiment of the present invention, including Create/Map Enterprise 35 (FIG. 20), Create/Map New Entity 36 (FIG. 19), List Users 32 (FIG. 15), and Create Users 33 (FIG. 18).

CitiAdmin has the ability to create a user login for a CitiAdmins. When the appropriate user type is selected, rights are given to the user to perform their functionalities. The CitiAdmin can also reset password for all CitiAdmins.

### Daily Feeds

In an embodiment of the present invention, the OMS system is dependent upon Chief Dealer to provide credit, holiday, rate, and trading results data. The following sections describe these feeds in greater detail.

### Credit

In an embodiment, the Credit Feed is loaded at the beginning of each business day. An XML request is sent to ChiefDealer including a list of enterprise names. Chief Dealer processes this file and returns a response containing all of the credit limits for select enterprises. The OMS maintains a history of cumulative deals done on the system and adjusts the Chief Dealer limit with that data.

### Holiday

In an embodiment of the present invention, the holiday ( at least one year from the current date) feed is loaded at the beginning of each business day. An XML request is sent to Chief Dealer including a list of currency pairs. Chief Dealer processes this file and returns a response containing all of the holidays for the selected currency pairs for at least one year in the future.

### Indicative Rates

In an embodiment, the indicative rate feed is requested at predetermined intervals configurable in the OMS. An XML request is sent to Chief Dealer including a list of currency pairs. Chief Dealer processes this file and returns the spot rates for all selected currency pairs.

### Trade Execution Details

In an embodiment of the present invention, this feed is the only one generated by Chief Dealer as an asynchronous message. The returning of deals in Chief Dealer triggers this process. This file contains all executed deal information including commissions and blended rate.

### Error Handling

In an embodiment, all errors are captured and email messages arc sent to a predetermined group of people with a descriptive error message and information that aids third level support in solving the issue.

### Presentation Functions

Presentation functions transforms content into an appropriate displayable format. There are multiple implementations to support devices with different input-output characteristics, or to support users with special needs. Presentation services are used both in publishing static content to web servers, and in formatting dynamically generated pages.

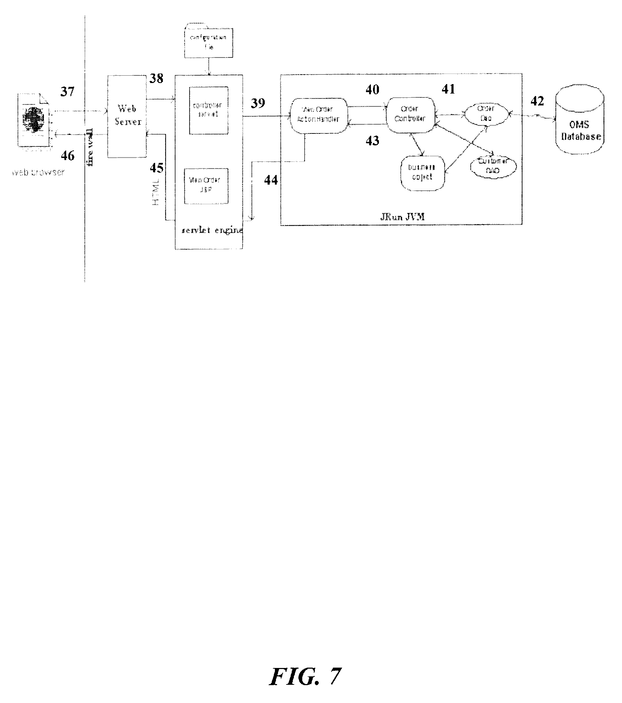

The use of the JRun Servlet and JSP engine is assumed to be the baseline. The presentation services require close coordination with the back end Development team. The relevant resources include graphical gif files, HTML documents and document templates, JSP templates, XML specification of each business object, and related XSL stylesheets that map each XML tag to an equivalent HTML and/or Javascript rendering. A typical user interaction is as shown in FIG. 7 for a user request to view an order.

### Business Functions

Business functions are responsible for implementing all application business logic. Typically, this includes activities such as performing queries, conducting transactions, and processing forms input. Because of the need to support devices with different presentation characteristics in the future, it is important that business services avoid any processing related to presentation issues or to data model specific structures (such as relational tables or records).

### Data Access Functions

Data access services include all database-related data structures and logic and interfaces to data maintained in the new data stores. These services are responsible for connection pooling, and transaction management. The baseline access to the MS SQL Server 2000 database will be JDBC.

### Common Functions

Common services include facilities required by a broad range of applications, such as e-mail support, session management, logging, and error handling.

### Viewing Function

Reference is now made to the embodiment in FIG. 7 regarding the following listed item numbers:
37. After successful login, the user requests the OMS to view a selected order by clicking on the View Order hyperlink. The browser sends the HTTP request to view the order to the web server.
38. Web server determines that the request is handled by a main controller servlet and forwards the HTTP request.
39. Using the configuration file the controller servlet determines that the Order View request (Action) is handled by the Order Action Handler, it forwards the request to the OrderHandler with the message "View Order".
40. Order Action Handler forwards the request to appropriate method in the order controller object.
41. Order controller interfaces with the order data access objects (order DAO) and the order business object to retrieve the order data.
42. This is a database call by Order DAO on behalf of the Order Controller or Order business object.
43. The order controller returns the order data back to the view order handler.
44. The order handler augments the data from various controllers, if needed, and forwards the Java objects to view order JSP.
45. The view order JSP prepares the HTML response from the order data from the shared data resources (bean) and forwards it to the web server.
46. Web server sends the response back to the client browser.

### Instinet® Crossing Algorithm

The following section describes an embodiment for the Crossing Algorithm, also referred to as the Instinet Crossing® API. The OMS system sends netted orders into the algorithm at a specified time (configurable by the Citibank® Admin.). The OMS system then retrieves the orders once the crossing has completed. The algorithm sends data in the order record that contains how much of the order was matched. The OMS system is then able to determine the proportion of internal, external, and residual amounts for each order. Internal crosses will be executed first. Orders are presented at the Enterprise Total Buy and Enterprise Total Sell level. Each order has an Enterprise ID as the enterprise identifier, an indicator to present whether it is a buy or a sell, the minimum cross amount instructed from the order entry screen, currency type and the total buy/sell amount.

An embodiment of the present invention includes an algorithm that matches buy and sell orders, according to the following rules:
1. Each order has both an order size (the "maximum") and a minimum size (the "minimum"). The order does not trade more than its maximum. The order will not trade less than its minimum, unless it trades zero.
2. Orders trade in integral numbers of trading units. The trading unit for trades in Japanese Yen (currency symbol JPY) is 1 Yen. The trading unit for trades in all other currencies is 1/100 of the currencies.
3. Orders are placed as paired buy and sell orders for an enterprise and currency. Paired orders are "self-crossed" with each other before being matched with other enterprises' orders. Only the remainder (that is, the difference between the larger and smaller sides) is available to be matched with orders from other enterprises. The buy and sell orders both trade at least their minimums, taking into account both self-crossing and matching with other enterprises' orders, or neither order will trade. There is no more than 1 buy-sell order pair per currency per enterprise.

The Algorithm may not always produce the best possible trades. The Algorithm attempts to maximize the amount of currency traded in each currency. However, because the problem complexity increases exponentially based on the number of orders, a heuristic approach, rather than an exhaustive search, is used.

### Installation and Setup

An embodiment of the Instinct FX Cross^{SM} Engine is built on and for Windows 2000. The Instinet FX Cross^{SM} Engine is packaged as two files. These files are installed together in a directory that is accessible by default to the Java application calling the Engine, either through the CLASSPATH environment variable or through some other method. This allows access to the Instinet FX Cross^{SM} classes and routines from Java applications.

The two files are FX.DLL and FXCrossEngine.JAR. The DLL file contains the matching routines, while the JAR file contains the Java classes and JNI interface to the matching routines.

### Backup Algorithm

In addition, in an embodiment of the present application, there is an "alternative algorithm" which performs only the self-crossing step of the algorithm, that is, it crosses only the amounts within each paired buy and sell order, without considering any other orders for that currency. When the alternative algorithm is used, only orders whose smaller side (buy or sell) is greater than or equal to the minimum on the larger side will trade. Under the alternative algorithm, any orders that do trade will trade the same amount on both the buy and sell sides.

### Commissions

In an embodiment of the present invention, there are three commission types. Internally crossed commission, externally crossed commission, and residual commission.

Internally crossed commission is applied to order amounts that are crossed within the same enterprise. The default rate is 0, internal crossing service is done as a courtesy. However, this is configurable in Chief Dealer. An externally crossed commission is applied to transaction amounts traded in the cross with other customers. This rate is configurable in Chief Dealer.

A residual commission is applied to transaction amounts that did not have a match in the Instinet FX Cross^{SM} when the customer has instructed to execute residuals. Again this rate is configurable in Chief Dealer. The Instinet FX Cross^{SM} may charge different customers different commissions, requiring commission information to be maintained at the customer enterprise level.

This requires a CitiAdmin person to apply different commissions to different customers on the Chief Dealer side via a commission entry interface. In addition, when a trade execution has internally/externally crossed amount and residual amount, as is likely to be the case whenever a customer requests residual execution, a "blended commission" is calculated and applied on the Chief Dealer side.

The blended commission is the weighted average of the three different commission rates for the internally/externally crossed and residual amounts that comprise that single trade. The XML based order information sent to Chief Dealer has three components that determine the blended rate. Internally crossed amount, externally crossed amount and residual amount.

In one embodiment, commissions are initially negotiated with customers in basis points. However, commissions for trade executions are expressed only in FX pips. Chief Dealer converts commissions from basis points to the appropriate number of FX pips automatically after a CitiAdmin selects the spread that yields the correct basis point spread.

### Blended Rate Formula

Blended exception = (Internally crossed exception* (Internally crossed amount/Total trade amount) +(Externally crossed exception)*(Externally crossed amount/Total trade amount)+ (Residual exception)*(Residual amount/Total trade amount)
For example:

Assuming the internally crossed exception = 1; externally crossed commission = 2; and residual is 3.
Entity 1
Internally crossed amount = 10
Externally crossed amount = 30
Residual amount = 20
Blended exception = 1*10/60+2*30/60+3*20/60= .167+ 1 + 1 = 2.167
Enterprise exception in Spread Matrix (Client_spread_profile table) is updated to 2.167. Spread is calculated following existing rules in Chief Dealer application for Spread matrix logic.

### Example: Customer Buys 60 and Sells 10. Possible outcome.

Historical execution reports show commission data in pips within the OMS system.

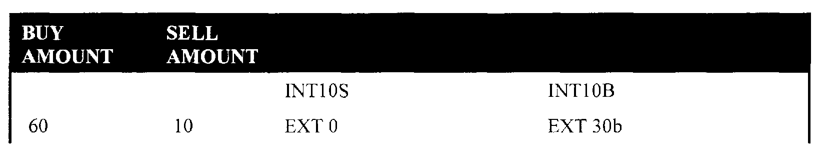

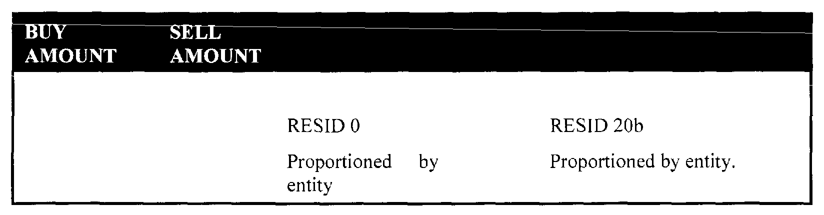

In an embodiment of the present invention, the Instinet FX Cross^{SM} may charge different customers different commissions, requiring commission information to be maintained at the customer enterprise level. To fulfill this requirement, the exception logic in the current Chief Dealer spread matrix is used. Citibank® Administrators are able to add exceptions as percentages (not pips) at the enterprise per currency level. (Exceptions need to be set up twice in Chief Dealer for a currency pair depending on what is bought or sold.).

The Instinet FX Cross^{SM} also charges each customer different commissions for internally matched, externally matched and residual execution amounts. Therefore, exceptions are added for internally matched, externally matched and residual amounts. Matched amounts may carry a lower commission than residual amounts because matched amounts involve no market risk.

When a trade execution has both a matched portion and residual portion, as is likely to be the case whenever a customer requests residual execution, the Instinet FX Cross^{SM} is able to calculate and apply a 'blended exception'. The blended exception is a weighted average of the customer's three different exceptions for the matched (internal and external) and residual amounts that comprise the trade.

Calculating the blended exception for each order requires the exceptions for enterprises or currencies (which may vary by customer), the internally matched amount of an order, the externally matched amount of an order and the residual amount of an order. Chief Dealer performs this function immediately after the fixing.

In an embodiment of the present invention, in order for Chief Dealer to calculate blended exceptions, it needs to receive the matched (internal and external) and residual portions of each order from the OMS. Chief Dealer would need to be modified to receive matched (internal and external) and residual amounts; to perform the blending calculation; and to apply the blended exception after the fixing by updating the standard exceptions stored in the Chief Dealer database.

### Enterprise-Level Commissions

In an embodiment of the present invention, commissions are charged on an enterprise per currency pair level rather than an entity per currency pair level. A buy and sell of the same currency pair is treated as two separate currency pairs (i.e. EURUSD and USDEUR).

If an enterprise submits orders allocated across more than one entity, entities on the larger side of buy/sell receives the blended commission based on how much of the order was internally crossed, externally crossed or resulted as a residual amount. The smaller side of buy/sell orders automatically receive the internally crossed commission because all entities on the smaller side of the orders are internally crossed.

### Response Time/Performance

In a further embodiment of the present invention, assuming there will be 300 customers exercising 30 trades each; 9000 trades need to be processed and booked within a 10-minutes timeframe. Crossing happens in a matter of seconds.

Web application response times are typically dominated by network latencies rather than server response. Financial applications should be designed to perform long-running tasks asynchronously to avoid lengthy user waits and the framework will support multithreaded asynchronous processing where needed (e.g. database result processing, computational utilities, etc.).

### Fault Tolerance

The application responds gracefully to hardware and software faults as well as network outages, especially where dial-up connections may be involved. Redundant web and application server hardware, together with automatic fail-over, comprise one dimension of fault tolerance. The Instinet FX Cross^{SM} framework provides error-handling facilities that allows for graceful response of applications, including server migration where appropriate. Transaction management facilities are required to ensure data integrity in a potentially unreliable context.

### Availability

An embodiment of the Instinet FX Cross^{SM} application is used 24 hours a day, 7 days a week, requiring 100% continuous availability. Servers may have to be taken down for pre-determined maintenance, such as software upgrades, so high-availability techniques, including hardware and software redundancy, load sharing and automatic fail-over, needs to be employed to ensure uninterrupted availability. From a network architecture perspective, the Instinet FX Cross^{SM} is more than prepared to cope with any hardware or software contingencies. With that, real-time redundancy of Web Server and Application Server are a part of this architecture.

### Resilience

In an embodiment of the present invention, to achieve the desired level of availability, the architecture avoids any single point of failure. This translates into an implementation that includes redundant web servers and servlet / Java Server Pages (JSP) engines. The system is configured in a way that with hardware and software fail-over when any individual server becomes inoperable. The Database server, although unique, and technically considered a single point of failure, is configured in a way that it's resilience approaches a level of 100%.

### Authentication and Access Control

A large majority of the potential e-business applications that have been discussed presuppose explicit authentication of the application user.

### Privacy and Tamper Prevention

An embodiment of the Instinet FX Cross^{SM} hosts data that is personal, private, and potentially regulated, requiring protection above and beyond that associated with normal levels of commercial sensitivity. In an embodiment, access will be controlled and may be audited at the database. It is important that database security measures deemed necessary are not compromised. This includes auditing of queries and updates.

### Screens

Referring now to the embodiment shown in FIG. 8 (Current Orders by Currency), Current Orders by currency is the default screen when a customer logs in. It shows the status of two types of orders, Active and Inactive. Users have the ability to add, edit or delete an order. A live clock in red color represents the time remaining before the fixing cut-off time. The clock is in "hh:mm:ss" format.

In this embodiment, the screen is separated into two categories, active and inactive. Active orders are ready to be submitted to the next fixing. Active orders have already been validated against credit and holiday information. Inactive Orders are saved by the user but will not be submitted to the next fixing. No validation has been done to these orders.

### Fields

**51. Currency Pair Dropdown**
   **Description:** This field is used to select which currency is desired when adding a new order. An embodiment of the dropdown is populated with the following offered currencies;
   EUR
   GBP
   CHF
   SEK
   NOK
   DKK
   JPY
   CAD
   AUD
   NZD
   HKD
   SGD
   **Validation:** NA
   **Default Value:** Empty
   **Action:** NA
   **Roll Over Text:** NA
   **Format:** NA
**52. Add Order button**
   **Description:** This button is used when user wants to create a new order.
   **Validation:** Checks to make sure Currency Pair dropdown has a currency selected **Default Value:** NA
   **Action:** Clicking this button takes the user to order entry screen for selected currency pair.
   **Roll Over Text:** "Add Order"
   **Format:** NA
**53. Time Remaining Label**
   **Description:** This label keeps the user informed of how much time is remaining until the system will no longer accept orders. (No longer accepting orders) once time actually runs out.
   **Validation:** NA
   **Default Value:** NA
   **Action:** NA
   **Roll Over Text:** NA
   **Format:** Red Font
**54. Delete Current Order button**
   **Description:** This button is used to remove the current orders for that currency pair. **Validation**: NA
   **Default Value:** NA
   **Action:** This button brings up a confirmation box. The box has the following options. De-activate current orders, delete current orders, or cancel the operation. If the Delete button is selected then the current orders are deleted and the screen is refreshed showing all current orders.
   **Roll Over Text:** "Delete Order"
**55. Currency Column**
   **Description:** This column displays all of the current currency pairs for which orders exist. The currency pair is also a link.
   **Validation:** NA
   **Default Value:**
   **Action:** This column also contains a link to the Manual order entry screen. Once clicked this screen is displayed containing all of the current orders for that currency pair.
   **Roll Over Text:** NA
   **Format:** Centered.
**56. Buy Column**
   **Description:** This column displays total buy amount in currency.
   **Validation:** NA
   **Default Value:** NA
   **Action:** NA
   **Roll Over Text:** NA
   **Format:** Numbers are right aligned. Numbers include commas.
**57. Sell Column**
   **Description:** This column displays total sell amount in currency.
   **Validation:** NA
   **Default Value:** NA
   **Action:** NA
   **Roll Over Text:** NA
   **Format:** Numbers are right aligned. Numbers are also in red and include a negative sign. Numbers include comas.
**58. Net Column**
   **Description:** This column displays the net amount in currency.
   **Validation:** NA
   **Default Value:** NA
   **Action:** NA
   **Roll Over Text:** NA
   **Format:** Numbers are right aligned. Numbers are red if negative and will also have a negative sign if the net order is sell. Numbers include commas.
**59. Number of Orders Column**
   **Description:** This column displays the number of orders entered for the corresponding currency pair (for active and inactive orders).
   **Validation:** NA
   **Default Value:** NA
   **Action:** NA
   **Roll Over Text:** NA
**60. Minimum Cross Amount**
   **Description:** This column displays the Minimum cross amount in currency. **Validation:** NA
   **Default Value:** NA
   **Action:** NA
   **Roll Over Text:**
   **Format:** Numbers are right aligned. Numbers include commas.
**61. Residual Amount**
   **Description:** This column displays the Residual trade instructions for the corresponding currency pair.
   **Validation:** NA
   **Default Value:** NA
   **Action:** NA
   **Roll Over Text:** User instructions for handling residuals.

Referring now to the embodiment shown in FIG. 9 (Import Orders), customers have the ability to upload blocks of orders by choosing the "Import" option. The format of the up loadable orders is customizable under "Order of fields.''

### Fields

**62. Order of Fields Link**
   **Description:** This link takes the user to the Order of Fields configuration menu, which enables the user to customize the order of the fields in the upload file. **Validation:** NA
   **Default Value:** Empty
   **Action:** This action takes the user to the Order Of Fields configuration screen.
   **Roll Over Text:** Configures order of fields for uploadable files.
   **Format:** NA
**63. Browse Button**
   **Description:** This button allows the user to browse their local file system and select the trade file they have created for upload.
   **Validation:** NA
   **Default Value:** NA
   **Action:** Clicking this button enables the user to browse their local file system and select the trade file they have set up.
   **Roll Over Text:** NA
   **Format:** NA
**64. Upload Button**
   **Description:** This button is used to upload the trades once selected using browse. **Validation:** NA
   **Default Value:** NA
   **Action:** This button begins the upload process and takes the user to the import order log screen.
   **Roll Over Text:** NA
   **Format:** NA

Referring now to the embodiment shown in FIG. 10 (Order of Fields Screen), this screen enables the user to select the order of fields for the trade input file.

### Fields

**65. Import Orders link**
   **Description:** This link takes the user to the Import Orders page so that the file can be uploaded.
   **Validation:** NA
   **Default Value:** Empty
   **Action:** This action takes the user to the Import Orders Page screen. If field data has changed but not saved, the user is given an informative message "Save changes" with a yes or no choice.
   **Roll Over Text:** NA
   **Format:** NA
**66. Field Separator drop down.**
   **Description:** This object is used to select which character should be used to separate fields in the upload file.
   **Validation:** NA
   **Default Value:** comma
   **Action:** NA
   **Roll Over Text:** NA
   **Format:** NA
**67. Entity name column Number**
   **Description:** This text box is used to enter order number for column Entity Name **Validation:** In this embodiment, this value is numeric and between the values of 1 - 255 and has not been selected previously for another field.
   **Default Value:** 1
   **Action:** NA
   **Roll Over Text:** NA
   **Format:** NA
**68. Buy Currency column Number**
   **Description:** This text box is used to enter order number for column Buy Currency **Validation:** In this embodiment, this value is numeric and between the values of 1 - 255 and has not been selected previously for another field.
   **Default Value:** 2
   **Action:** NA
   **Roll Over Text:** NA
   **Format:** NA
**69. Buy Amount column Number**
   **Description:** This text box is used to enter order number for column Buy Amount **Validation:** In this embodiment, this value is numeric and between the values of 1 - 255 and has not been selected previously for another field.
   **Default Value:** 3
   **Action:** NA
   **Roll Over Text:** NA
   **Format:** NA
**70. Sell Currency Column Number**
   **Description:** This text box is used to enter order number for column Sell Currency. **Validation:** In this embodiment, this value is numeric and between the values of 1 - 255 and has not been selected previously for another field.
   **Default Value:** 4
   **Action:** NA
   **Roll Over Text:** NA
   **Format:** NA
**71. Sell Amount column Number**
   **Description:** This text box is used to enter order number for column Sell Amount **Validation:** In this embodiment, this value is numeric and between the values of 1 - 255 and has not been selected previously for another field. It may or may not have a negative sign.
   **Default Value:** 5
   **Action:** NA
   **Roll Over Text:** NA
   **Format:** NA
**72. Value Date column Number**
   **Description:** This text box is used to enter order number for column Value Date. Validation: In this embodiment, this value is numeric and between the values of 1 - 255 and has not been selected previously for another field.
   **Default Value:** 6
   **Action:** NA
   **Roll Over Text:** NA
   **Format:** NA
**73. Value Date drop down**
   **Description:** This text box is used to enter order number for column Value Date. **Validation:** NA
   **Default Value:** dd/mmm/yyyy
   **Action:** NA
   **Roll Over Text:** NA
   **Format:** NA
**74. Save Changes button**
   **Description:** This button is used to save changes to the order of fields screen **Validation:** NA
   **Default Value:** empty
   **Action:** This button enables the OMS system to save the current fields on the form into the Database. It takes the user to the import orders screen.
   **Roll Over Text:** NA
   **Format:** NA

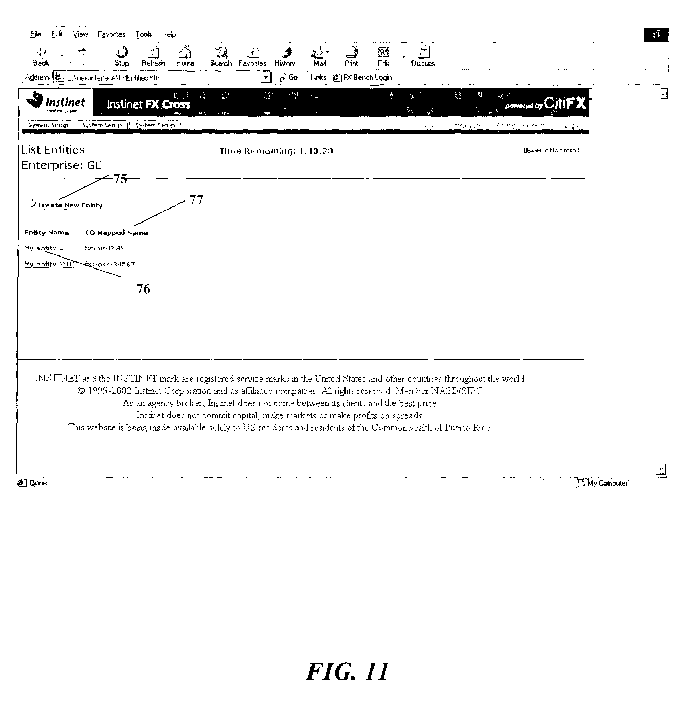

Referring now to the embodiment shown in FIG. 11 (List Entities), this screen enables the user to list the entities of a specific enterprise.

### Fields

**75. Create new Entity Button**
   **Description:** This button enables the user to add a new entity. In this embodiment, this button is displayed for CitiAdmin users.
   **Validation:** NA
   **Default Value:** Empty
   **Action:** This action takes the user to the Add/Edit entity screen.
   **Roll Over Text:** "Add Entity"
   **Format:** NA
**76. Entity name column**
   **Description:** This column displays the name of the entity. It also contains a link when viewed by CitiAdmins.
   **Validation:** NA
   **Default Value:** NA
   **Action:** Once clicked the user is taken to the add/edit entity screen.
   **Roll Over Text:** NA
   **Format:** NA
**77. Chief Dealer Mapped Name**
   **Description:** This column contains the mapped name in the OMS system. This is the name that is sent to Chief Dealer when trades are submitted.
   **Validation:**
   **Default Value:**
   **Action:** NA
   **Roll Over Text:** NA
   **Format:** NA

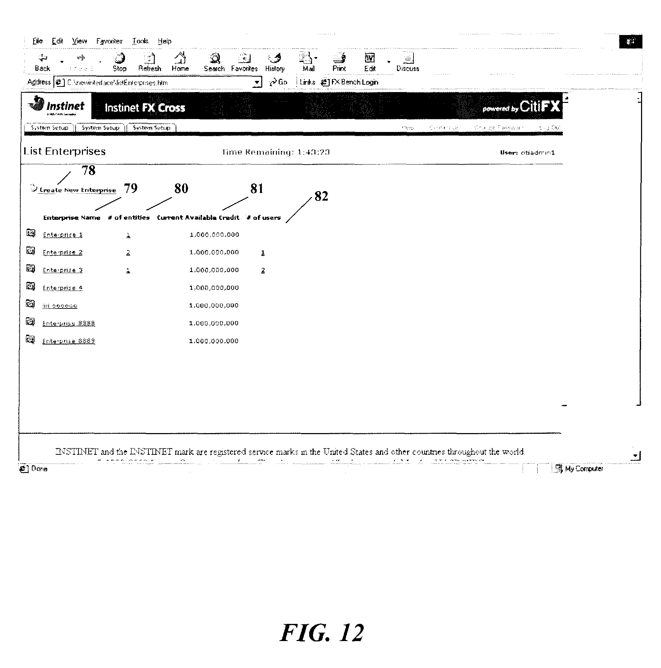

Referring now to the embodiment shown in FIG. 12 (List Enterprises), this screen is used by the CitiAdmin and the Instinet® trader. It allows these users to view current outstanding credit as well as number of entities and users. The Instinet® trader has the opportunity to act for a customer and the CitiAdmin can access edit/add enterprises from this screen.

### Fields

**78. Create new enterprise button.**
   **Description:** In this embodiment, this button allows the CitiAdmin to add new enterprises into the OMS system. It is displayed to CitiAdmin.
   **Validation:** NA
   **Default Value:** NA
   **Action:** This button takes the user to the Add/Edit Enterprise screen.
   **Action:** This button takes the user to the Current Orders by Currency Page.
   **Roll Over Text:** "Create Enterprise"
   **Format:** NA
**79. Enterprise Name column**
   **Description:** This column displays the name of the enterprise. The name of the enterprise is also a link.
   **Validation:** NA
   **Default Value:** NA
   **Action:** This link has two different actions depending on user type. CitiAdmins are taken to the Edit/Add enterprise screen. Instinet® traders are taken to the Current Orders by Currency Page. The Instinet® trader is then acting for the customer.
   **Roll Over Text:** NA
   **Format:** NA
**80. # of entities**
   **Description:** This column displays the number of entities currently belonging to the corresponding enterprise. This is also a link.
   **Validation:** NA
   **Default Value:** NA
   **Action:** In this embodiment, this takes the user to the list entities screen if number is greater than 0. If number is equal to 0 there is no link.
   **Roll Over Text:** NA
   **Format:** NA
**81. Current Outstanding Available Credit**
   **Description:** This column displays the current outstanding credit line that has been established for the corresponding enterprise.
   **Validation:** NA
   **Default Value:** NA
   **Action:** NA
   **Roll Over Text:** NA
   **Format:** Number is right aligned. Numbers include commas.
**82. # Of users**
   **Description:** This column displays the amount of users currently associated with the corresponding enterprise. This is also a link.
   **Validation:** NA
   **Default Value:** NA
   **Action:** In this embodiment, this takes the user to the list users screen if number is greater than 0 or takes you to Add/Edit user if number is 0. If number is equal to 0 then link is not displayed.
   **Roll Over Text:** NA
   **Format:** Number is right aligned. Numbers include commas.

Referring now to the embodiment shown in FIG. 13 (Manual Order Entry), this screen is where the customer and Instinet® Trader (Acting for a customer) can manually enter/edit trades into the OMS system.

### Fields

**83. Currency Pair Label**
   **Description:** This label displays the currency pair that the user is entering orders against.
   **Validation:** NA
   **Default Value:** NA
   **Action:** NA
   **Roll Over Text:** NA
   **Format:** NA
**84. Minimum trade amount text box.**
   **Description:** This text box contains the amount that must be traded.
   **Validation:** In this embodiment, the number cannot be less than the smaller of the two amounts ( Buy or Sell). Must also be numeric.
   **Default Value:** This field defaults to the absolute value of the smaller of the two amounts( Buy or Sell)
   **Action:** NA
   **Roll Over Text:** Minimum Trade Amount indicates the minimum amount a user must execute by any available means - whether crossing, residual execution at Citibank®, or a combination of both. If the amount actually crossed exceeds Minimum Trade Amount, no residual execution takes place. If Minimum Trade Amount exceeds the amount actually crossed, residual execution takes place in an amount equal to the difference between Minimum Trade Amount and the amount actually crossed. Specifying Minimum Trade Amount will disable the Minimum Crossed text boxes. Format: This number is right aligned. Numbers include commas.
**85. Total Buy amount.**
   **Description:** This text box is taken from the sum of all active buy amounts. In this embodiment, the field is disabled and cannot be edited by the customer.
   **Validation:** NA
   **Default Value:** NA
   **Action:** NA
   **Roll Over Text:** NA
   **Format:** This number is right aligned. Numbers include commas.
**86. Indicative Spot Rate text box.**
   **Description:** This text box contains the indicative spot rate for the currency pair. In this embodiment, the field is disabled and the rate is refreshed every 30 minutes (configurable). The customer must refresh the page in order to receive the new indicative spot rate.
   **Validation:** NA
   **Default Value:** NA
   **Action:** NA
   **Roll Over Text:** NA
   **Format:** This field should be centered.
**87. Minimum Buy Cross text box.**
   **Description:** This text box contains the minimum cross amount for Total buy. In this embodiment, if the total active buy amount is less than the total active sell amount, then the field defaults to this amount and is disabled. The minimum for Sell is then editable by the customer.
   **Validation:** In this embodiment, it must be numeric, at least as large as smaller of two amounts (Buy or Sell) and cannot be greater than Total buy.
   **Default Value:** NA
   **Action:** In this embodiment, min % for Total Buy(Field 6), Min % for Total Sell(Field 6A) will automatically be updated by any changes to this field.
   **Roll Over Text:** In this embodiment, minimum Cross indicates in currency terms the minimum amount that must be crossed. If Minimum Crossed cannot be met during the crossing process, 0 will be crossed, and no residuals will be executed. Minimum Cross can be specified only for the larger of Total Buy or Total Sell.
   **Format:** This number is right aligned. Numbers include commas.
**88. Minimum Sell Cross text box.**
   **Description:** In this embodiment, this text box contains the minimum cross for Total Sell. If the total active sell amount is less than the total active buy amount than the field defaults to this amount and is disabled.. The minimum for buy is then editable by the customer.
   **Validation:** Must be numeric, at least as large as the smaller of two amounts (Buy or Sell). And cannot be greater than the Total Sell.
   **Default Value:** NA
   **Action:** Min % for Total Buy(Field 6), Min % for Total Sell(Field 6A) will automatically be updated by any changes to this field.
   **Roll Over Text:** Roll Over Text: See Roll Over Text for 5.
   **Format:** This number is in red with a negative sign and is right aligned. Numbers include commas.
**89. Minimum Buy % text box.**
   **Description:** In this embodiment, this text box contains the minimum percentage of the total amount(sell) that must be crossed. (e.g., if total buy is 20,000,000 and min. buy is 20,000,000, then % = 100)
   **Validation:** Must be between 0 and 100
   **Default Value:** NA
   **Action:** Min % for Total Buy(Field 6)and Min Cross for Total Sell(Field 5A) will automatically be updated by any changes to this field.
   **Roll Over Text:** NA
   **Format:** This number is right aligned. Numbers include commas.
**90. Minimum Sell % text box.**
   **Description:** In this embodiment, this text box contains the percentage of the total amount(sell) that the minimum is comprised of. (e.g., if total buy is 20,000,000 and
   min buy is 20,000,000, then % = 100)
   **Validation:** must be between 0 and 100
   **Default Value:** NA
   **Action:** Min % for Total Buy(Field 6), Min % for Total Sell(Field 6A)
   **Roll Over Text:** NA
   **Format:** This number is right aligned. Numbers include commas.
**91. Send all residuals back and do not execute radio button**
   **Description:** This radio button is used to instruct the OMS system not to execute any residuals.
   **Validation:** NA
   **Default Value:** True
   **Action:** Activates minimum cross controls.
   **Roll Over Text:** No residual amounts will be executed by Citibank®.
   **Format:** NA
**92. Execute all residuals at CitiFX® Benchmark radio button**
   **Description:** This radio button is used to instruct the OMS system to execute all residuals at the CitiFX® Benchmark.
   **Validation:** NA
   **Default Value:** False
   **Action:** This activates minimum cross controls.
   **Roll Over Text:** All residual amounts will be executed by Citibank®.
   **Format:** NA
**93. Minimum trade Amount radio button.**
   **Description:** In this embodiment, this radio button is used in conjunction with the minimum trade amount text box. In order to enter an amount into the minimum amount text box this button must be set to true.
   **Validation:** NA
   **Default Value:** False
   **Roll Over Text:** NA
   **Format:** NA
**94. Save & Submit button**
   **Description:** This command button saves the current screen.
   **Validation:** NA
   **Default Value:** NA
   **Action:** In this embodiment, once activated the validation for the form is then performed. The form is sent to the server. All active orders are subtracted from the current credit for the enterprise. All errors will be returned at this point at one time giving the user the opportunity to fix all errors at the same time. Any orders that have been deactivated/cleared but were already processed will be added back to the current available credit. Any new orders will be deducted from the current available credit. If multiple entities on the same side exist with the same value date an informational message will be displayed. If quantity and value date have been entered but no entity selected an error message will be displayed preventing any further processing until completed.
   **Roll Over Text:** "Save Orders"
   **Format:** NA
**95. Buy Amount Text Box**
   **Description:** This text box is used to capture the buy amount for the currency selected.
   **Validation:** must be numeric and greater than zero.
   **Default Value:**
   **Roll Over Text:** NA
   **Format:** This number is right aligned. Numbers include commas.
**96. Sell Amount Text Box**
   **Description:** In this embodiment, this text box is used to capture the buy amount for the currency selected.
   **Validation:** Must be numeric and greater than zero. If user enters non-negative add - sign, if user enters negative number, accept it.
   **Default Value:**
   **Roll Over Text:** NA
   **Format:** In this embodiment, this number is always red and is negative unless it is zero. Numbers include commas.
**97. Sell Amount Text Box**
   **Description:** In this embodiment, this text box displays the sell amount in USD terms for the currency selected calculated at the indicative spot rate. The sell amount is disabled in the Buy Section. In the Sell section that field behaves like the Buy Amount Text Box in the buy section.
   **Validation:** NA
   **Default Value:**
   **Action:** NA
   **Roll Over Text:** NA
   **Format:** Numbers will be right aligned and in red with negative signs. Numbers include commas.
**98. Net textbox.**
   **Description:** This text box displays the amount left over after the internal crossing. **Validation:** NA
   **Default Value:** NA
   **Action:** NA
   **Roll Over Text:**
   **Format:** Must be right aligned. Could also be red and signed depending on net order. Numbers include commas.
**99. Select Entity Dropdown.**
   **Description:** This dropdown contains a list of all entities that are part of the enterprise tied to the current user.
   **Default Value:** "Select entity"
   **Action:** NA
   **Roll Over Text:** "Select entity"
   **Format:** NA
**100. Value Date:**
   **Description:** In this embodiment, this text box is used to capture the value date of the order being entered.
   **Validation:** Must be valid date greater than today's date but not more than a year out. Also cannot be a weekend or holiday.
   **Default Value:** "dd-mmm-yyyy"
   **Action:** NA
   **Roll Over Text:** NA
   **Format:** NA
**101. Apply to subsequent button**
   **Description:** This button gives the user the opportunity to carry the value date to all subsequent orders being entered.
   **Validation:** NA
   **Default Value:** NA
   **Action:** Once depressed user is given the option to carry value date to all subsequent orders. If user selects yes the value date is then carried down to all subsequent orders for that side.
   **Roll Over Text:** "Apply value date to all subsequent orders"
   **Format:** NA
**102. Active/Inactive checkbox**
   **Description:** This check box gives the user the opportunity to make an order active or inactive.
   **Validation:** NA
   **Default Value:** true
   **Action:** Changes shading of the order.
   **Roll Over Text:** Active orders will be submitted to the next cross. Inactive orders are saved but will not submitted to the next cross.
   **Format:** NA
**103. Add Rows Button (Buy)**
   **Description:** This button gives the user the opportunity to add rows. The current default is 5 rows.
   **Validation:** NA
   **Default Value:** NA
   **Action:** Adds 5 new rows to the current screen for Buy.
   **Roll Over Text:** "Add Rows"
   **Format:** NA
**104. Add Rows Button (Sell)**
   **Description:** This button gives the user the opportunity to add rows. The current default is 5 rows.
   **Validation:** NA
   **Default Value:** NA
   **Action:** Adds 5 new rows to the current screen for Sell.
   **Roll Over Text:** "Add Rows"
   **Format:** NA
**105. Total Active Buy text box.**
   **Description:** In this embodiment, this text box displays the total of all active buy and sell orders. It is disabled and not editable by the user. This field is automatically updated by the addition of active orders.
   **Validation:** NA
   **Default Value:** NA
   **Action:** NA
   **Roll Over Text:** NA
   **Format:** Must be right aligned with commas.
**106. Total Active Sell text box.**
   **Description:** This text box displays the total of all active buy and sell orders. It is disabled and not editable by the user. This fields is automatically updated by the addition of active orders.
   **Validation:** NA
   **Default Value:** NA
   **Action:** NA
   **Roll Over Text:** NA
   **Format:** Must be red and have negative sign. Numbers include commas.
**107. Delete Button.**
   **Description:** This button allows the user to delete an order.
   **Validation:** NA
   **Default Value:** NA
   **Action:** This button clears the fields. Once the page is saved the record is removed and all of the credit is returned to the enterprise.
   **Roll Over Text:** "Delete order"
   **Format:** NA
**108. Select All Button.**
   **Description:** This button allows the user to make all current orders active. **Validation:** NA
   **Default Value:** NA
   **Action:** All current records are flagged as active.
   **Roll Over Text:** "Activate all orders"
   **Format:** NA

Referring now to the embodiment shown in FIG. 14 (Change Password), this screen allows a user to change their password. It can be accessed from within the application and also when a user's password expires at login screen.

### Fields

**109. Username Label**
   **Description:** This label displays the username of the current logged in user. **Validation:** NA
   **Default Value:** NA
   **Action:** NA
   **Roll Over Text:** NA
   **Format:** NA
**110. Old Password textbox**
   **Description:** In this embodiment, this textbox is used to capture the original password that is being changed.
   **Validation:** Must be equal to original password
   **Default Value:** NA
   **Action:** NA
   **Roll Over Text:** NA
   **Format:** NA
**111. New Password textbox**
   **Description:** This textbox is used to capture the new password.
   **Validation:** In this embodiment, it must be alphanumeric and at least 8 characters long. Must contain capital letters, numbers, and lower case characters. Must be different from previous password by one character. Must be different than previous 3 passwords.
   **Default Value:** NA
   **Action:** NA
   **Roll Over Text:** NA
   **Format:** NA
**112. Change/Password button**
   **Description:** This button allows the user to change password.
   **Validation:** Form validation occurs. Old password must equal current password. Password must be different than previous passwords used in the OMS system. In this embodiment, the following error messages can be displayed on this screen when trying to change passwords.
   1. Password must be different than 3 previous passwords
   2. Must be alphanumeric and least 8 characters in length.
   3. Invalid Old Password.
   **Default Value:** NA
   **Action:** Password is changed and user is taken back to last screen in OMS system. If screen is from login then user is taken to default screen in OMS system.
   **Roll Over Text:** NA
   **Format:** NA
**113. Confirm Password Textbox**
   **Description:** This textbox is used to capture the new password again.
   **Validation:** Must match what is entered in New Password Textbox.
   **Default Value:** NA
   **Action:** NA
   **Roll Over Text:** NA
   **Format:** NA

Referring now to the embodiment shown in FIG. 15 (List Users), this screen lists all active and inactive users in the OMS system for a given enterprise. The screen is dynamically created based on the user type of the current logged on user.

### Fields

**114. Create new user button**
   **Description:** In this embodiment, this button will only be visible to the CitiAdmin. This button will allow the CitiAdmin to create a new user for specified enterprise. **Validation:** NA
   **Default Value:** NA
   **Action:** This takes the CitiAdmin to the add/edit profile screen.
   **Roll Over Text:** "Add User"
   **Format:** NA
**115. Reset Password**
   **Description:** This button will allow the user to reset the password for a specific user. **Validation:** NA
   **Default Value:** NA
   **Action:** Password is reset and new password is emailed to email address on file for specified user.
   **Roll Over Text:** "Reset Password"
   **Format:** NA
**116. Active/Inactive column.**
   **Description:** This column describes the current status of the user. (Active or Inactive)
   **Validation:** NA
   **Default Value:** NA
   **Action:**
   **Roll Over Text:**
   **Format:** NA
**117. Last Name Column**
   **Description:** This column displays the last name of the user.
   **Validation:** NA
   **Default Value:** NA
   **Action:** NA
   **Roll Over Text:** NA
   **Format:** NA
**118. First Name Column**
   **Description:** This column displays the first name of the user.
   **Validation:** NA
   **Default Value:** NA
   **Action:** NA
   **Roll Over Text:** NA
   **Format:** NA
**119. Phone Number column**
   **Description:** This column displays the phone number of the user.
   **Validation:** NA
   **Default Value:** NA
   **Action:** NA
   **Roll Over Text:** NA
   **Format:** NA
**120. Alternate Phone Number column**
   **Description:** This column displays the alternate phone number of the user. **Validation:** NA
   **Default Value:** NA
   **Action:** NA
   **Roll Over Text:** NA
   **Format:** NA
**121. Email column**
   **Description:** This column displays the email address of the user. It is also a link **Validation:** NA
   **Default Value:** NA
   **Action:** This enables the user to pull up current default mail client with email address populated in new mail.
   **Roll Over Text:** NA
   **Format:** NA
**122. User Name**
   **Description:** This column displays the user name of the user. This column is also a link for specific user types. (CitiAdmin)
   **Validation:** NA
   **Default Value:** NA
   **Action:** This takes the user to the edit Profile screen.
   **Roll Over Text:** NA
   **Format:** NA
**123. User Type**
   **Description:** This column displays the group that the user is contained. (i.e., Customer, Instinet® Trader, etc)
   **Validation:** NA
   **Default Value:** NA
   **Action:** NA
   **Roll Over Text:** NA
   **Format:** NA
**124. Last Login**
   **Description:** This column displays the date the user last logged in to the system. **Validation:** NA
   **Default Value:** NA
   **Action:** NA
   **Roll Over Text:** NA
   **Format:** NA

Referring now to the embodiment shown in FIG. 16 (OMS Setup), this screen is used for system setup and configuration of OMS system. In this embodiment, it can only be accessed by the Instinet® Admin.

### Fields

**125. Save Changes button**
   **Description:** This button allows user to save changes,
   **Validation:** NA
   **Default Value:** NA
   **Action:** All selections are saved in OMS system. In this embodiment, if a fixing was removed the following logic occurs: If there were orders placed for that fixing the user is prompted with a decision to make all active orders for this fixing inactive or cancel. If not, they are prompted with a "Are you sure" confirmation message.
   **Roll Over Text:** "Save"
   **Format:** NA
**126. Client cutoff time textbox**
   Description: This text box allows the Instinet® Admin the ability to change when customers are cutoff prior to a crossing.
   **Validation:** Must be numeric and greater than 30. (Configurable)
   **Default Value:** NA
   **Action:** NA
   **Roll Over Text:** NA
   **Format:** NA
**127. Instinct® cutoff time textbox**
   **Description:** This text box allows the Instinet® Admin the ability to change when Instinet® traders are cutoff prior to a crossing.
   **Validation:** must be numeric and less than or equal to client cutoff time.
   **Default Value:** NA
   **Action:** NA
   **Roll Over Text:** NA
   **Format:** NA
**128. Active fixings list box**
   **Description:** This box lists all available fixings in Chief Dealer. More than one fixing may be selected. Selecting a fixing creates a fixing in the OMS system. **Validation:** NA
   **Default Value:** NA
   **Action:** NA
   **Roll Over Text:** NA
   **Format:** NA
**129. Run Standard Cross radio button**
   **Description:** This button configures the OMS system to operate using the normal cross algorithm.
   **Validation:** NA
   **Default Value:** True
   **Action:** NA
   **Roll Over Text:** NA
   **Format:** NA
**130. Run Internal Cross radio button**
   **Description:** This button configures the OMS system to operate using the internal crossing algorithm due to emergency in the OMS system.
   **Validation:** NA
   **Default Value:** False
   **Action:** The system is now set to use the internal cross for the next fixing. Confirmation message will be displayed upon selecting this button. Send email to admins that this has been changed. Also sends email when this cross actually runs. **Roll Over Text:** NA
   **Format:** NA

Embodiments may further include an additional button: **the Synchronize Fixings from Chief Dealer.**
**Description:** This button allows the user to refresh the list box containing a list of available fixings.
**Validation:** NA
**Default Value:** False
**Action:** Begins synch process with Chief Dealer and returns a list of all valid, active, fixings.
**Roll Over Text:** NA
**Format:** NA

Referring now to the embodiment shown in FIG. 17 (Login Page), this screen is the login screen for the OMS system.

### Fields

**132. Username textbox.**
   **Description:** This textbox is used to capture the username of the person trying to enter the system.
   **Validation:** Must be valid username in the OMS system.
   **Default Value:** NA
   **Action:** NA
   **Roll Over Text:** NA
   **Format:** NA
**133. Password textbox.**
   **Description:** This textbox is used to capture the password of the person trying to enter the system.
   **Validation:** Must be equal to the password of the person trying to log in to OMS. In this embodiment, the field is populated with ***** characters as user enters password to protect password from onlookers.
   **Default Value:** NA
   **Action:** NA
   **Roll Over Text:** NA
   **Format:** NA
**134. Logon Button**
   **Description:** This allows the user to attempt login.
   **Validation:** NA
   **Default Value:** NA
   **Action:** This begins the login validation process. User is either logged into system or brought back to login page and errors are displayed explaining what went wrong.
   **Roll Over Text:** NA
   **Format:** NA
**135. Forgot Password button**
   **Description:** This allows the user to receive password via email.
   **Validation:** NA
   **Default Value:** NA
   **Action:** This initiates process of user receiving email that includes password. Displays verification message alerting the user of what is happening.
   **Roll Over Text:** NA
   **Format:** NA

Referring now to the embodiment shown in FIG. 18 (Edit User), this screen allows the CitiAdmin and Instinet® Admin to edit/add the profile of a user.

### Fields

**136. UserName label**
   **Description:** This label describes the user name of the user being edited.
   **Validation:** NA
   **Default Value:** NA
   **Action:** NA
   **Roll Over Text:** NA
   **Format:** NA
**137. Title (Optional)**
   **Description:** This textbox is used to capture the First Name of the user.
   **Validation:** NA
   **Default Value:** NA
   **Action:** NA
   **Roll Over Text:** NA
   **Format:** NA
**138. First Name Textbox**
   **Description:** This textbox is used to capture the First Name of the user.
   **Validation:** NA
   **Default Value:** NA
   **Action:** NA
   **Roll Over Text:** NA
   **Format:** NA
**139. Last Name Textbox**
   **Description:** This textbox is used to capture the Last Name of the user.
   **Validation:** NA
   **Default Value:** NA
   **Action:** NA
   **Roll Over Text:** NA
   **Format:** NA
**140. Email Address textbox**
   **Description:** This textbox is used to capture the email address of the user. **Validation:** Must be valid email address
   **Default Value:** NA
   **Action:** NA
   **Roll Over Text:** NA
   **Format:** NA
**141. Telephone Number**
   **Description:** This textbox is used to capture the Telephone number of the user. **Validation:** NA
   **Default Value:** NA
   **Action:** NA
   **Roll Over Text:** NA
   **Format:** NA
**142. Alternative Telephone Number**
   **Description:** This textbox is used to capture the Alternative Telephone number of the user.
   **Validation:** Must be numeric
   **Default Value:** NA
**143. Save Changes button**
   **Description:** This button saves the changes on the screen.
   **Validation:** NA
   **Default Value:** NA
   **Action:** All changes will be saved to OMS database. Password will then be sent to user for initial login and returns user back to list users page.
   **Roll Over Text:** NA
   **Format:** NA
**144. Login Enabled.**
   **Description:** This check box will allow the CitiAdmin to enable/disable users of the OMS system.
   **Validation:** NA
   **Default Value:** NA
   **Action:** User account will be locked/unlocked in the OMS system.
   **Roll Over Text:** NA
   **Format:** NA
**145. User Type Listbox**
   **Description:** This listbox allows the CitiAdmin to select what kind of user is being created. Only valid values will be presented. (CitiAdmin will not have option to create Instinet® Admin or Instinet® trader)
   **Validation:** NA
   **Default Value:** NA
   **Action:** NA
   **Roll Over Text:** NA
   **Format:** NA
**146. Delete User Button**
   **Description:** This allows the CitiAdmin to soft delete a user from OMS. This permanently removes the user from the OMS system but does not remove the data from the OMS database.
   **Validation:** NA
   **Default Value:** NA
   **Action:** User is flagged as deleted in OMS database.
   **Roll Over Text:** NA
   **Format:** NA

Referring now to the embodiment shown in FIG. 19 (Edit Entity), this screen allows CitiAdmin to edit an entity.

### Fields

**147. Entity Name textbox**
   **Description:** This textbox is used to capture the name of the entity. This field will be blank if it is an addition of entity and will be editable if existing.
   **Validation:** NA
   **Default Value:** NA
   **Action:** NA
   **Roll Over Text:** NA
   **Format:** NA
**148. Chief Dealer mapping name list box.**
   **Description:** This listbox displays all available mapping names from Chief Dealer. When the page is first opened a request is sent to Chief Dealer and all mapping names are returned. OMS parses these mapping names and only displays mappings that have not yet been associated with an entity.
   **Validation:** NA
   **Default Value:** NA
   **Action:** NA
   **Roll Over Text:** NA
   **Format:** NA
**149. Synchronize mappings button.**
   **Description:** This button refreshes the Chief Dealer mapping name list box. This manually triggers the request to Chief Dealer as described in item 2.
   **Validation:** NA
   **Default Value:** NA
   **Action:** Request is sent to ChiefDealer for current list of chief dealer mappings. Response is loaded into chief dealer mapping name list box,
   **Roll Over Text:** NA
   **Format:** NA
**150. Save Changes button**
   **Description:** This button saves the changes on the screen.
   **Validation:** NA
   **Default Value:** NA
   **Action:** All changes will be saved to OMS database.
   **Roll Over Text:** NA
   **Format:** NA
**151. Delete Entity Button**
   **Description:** In this embodiment, this allows the CitiAdmin to soft delete an entity from OMS. This permanently removes the entity from the OMS system but does not remove the data from the OMS database.
   **Validation:** NA
   **Default Value:** NA
   **Action:** Entity is flagged as deleted in OMS database. Confirmation message will be displayed. Entity Name must be unique for enterprise.
   **Roll Over Text:** NA
   **Format:** NA

Referring now to the embodiment shown in FIG. 20 (Edit Enterprise), this screen allows the Cititrader to edit an entity.

### Fields

**152. Enterprise Name textbox**
   **Description:** This textbox is used to capture the name of the enterprise
   **Validation:** NA
   **Default Value:** NA
   **Action:** NA
   **Roll Over Text:** NA
   **Format:** NA
**153. Chief Dealer mapping name list box.**
   **Description:** This listbox displays all available mapping names from Chief Dealer. **Validation:** NA
   **Default Value:** NA
   **Action:** NA
   **Roll Over Text:** NA
   **Format:** NA
**154. Synchronize mappings button.**
   **Description:** This button refreshes the Chief Dealer mapping name list box. **Validation:** NA
   **Default Value:** NA
   **Action:** Request is sent to ChiefDealer for current list of chief dealer mappings. Response is loaded into chief dealer mapping name list box.
   **Roll Over Text:** NA
   **Format:** NA
**155. Override total credit line text box.**
   **Description:** This textbox allows the CitiAdmin to override the total credit for the current day only.
   **Validation:** NA
   **Default Value:** NA
   **Action:** NA
   **Roll Over Text:** NA
   **Format:** NA
**156. Save Changes button**
   **Description:** This button saves the changes on the screen.
   **Validation:** NA
   **Default Value:** NA
   **Action:** All changes will be saved to OMS database.
   **Roll Over Text:** NA
   **Format:** NA
**157. Delete Enterprise Button**
   **Description:** This allows the CitiAdmin to soft delete an enterprise from OMS. This permanently removes the enterprise from the OMS system but does not remove the data from the OMS database.
   **Validation:** NA
   **Default Value:** NA
   **Action:** enterprise is flagged as deleted in OMS database.
   **Roll Over Text:** NA
   **Format:** NA

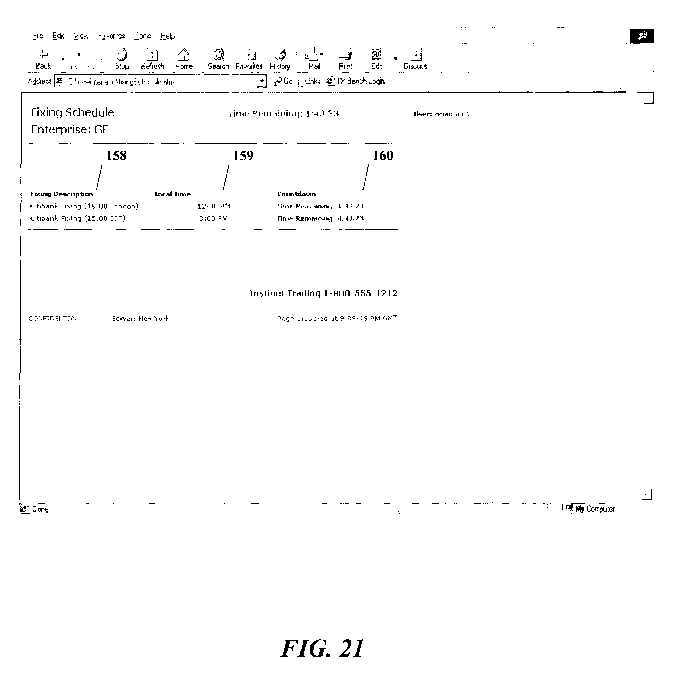

An embodiment of the present invention provides the following reports. The reports are downloadable into csv format. Referring now to the embodiment shown in FIG. 21 (Fixing Schedule), this report lists all of the available fixings for the OMS system.

### Fields

**158. Fixing Description**
   **Description:** This column contains a list of available fixings for the OMS system. **Validation:** NA
   **Default Value:** NA
   **Action:** NA
   **Roll Over Text:** NA
   **Format:** NA
**159. Local Time**
   **Description:** This column contains the local time that the fixing will be executed.
   **Validation:** NA
   **Default Value:** NA
   **Action:** NA
   **Roll Over Text:** NA
   **Format:** NA
**160. Time Remaining for Fixing**
   **Description:** This column contains how much time is left before fixing is executed. **Validation:** NA
   **Default Value:** NA
   **Action:** NA
   **Roll Over Text:** NA
   **Format:** Red text.

Referring now to the embodiment shown in FIG. 22 (Trade Details), this report lists detailed data about executed trades. It is sorted by Fixing, Entity, Buy currency. The deals report is defaulted to today.

### Fields

**161. Day Dropdown (For From Date)**
   **Description:** This drop down contains 1 - 31 and is used to select day of the month. **Validation:** NA
   **Default Value:** Current day
   **Action:** NA
**162. Month Dropdown (For From Date)**
   **Description:** This drop down contains "Jan" - "Dec". It used to select a month for search criteria.
   **Validation:** NA
   **Default Value:** Current Month
   **Action:** NA
**163. Year Dropdown (For From Date)**
   **Description:** In this embodiment, this drop down contains years from "2002" to "2010." It is used to select a year for search criteria.
   **Validation:** NA
   **Default Value:** Current Year
   **Action:** NA
**164. Day Dropdown (for to date)**
   **Description:** This drop down contains 1 31 and is used to select day of the month. **Validation:** NA
   **Default Value:** Tomorrow's day.
   **Action:** NA
**165. Month Dropdown (for to date)**
   **Description:** This drop down contains "Jan" - "Dec". It used to select a month for search criteria.
   **Validation:** NA
   **Default Value:** Tomorrow's month.
   **Action:** NA
**166. Year Dropdown (for to date)**
   **Description:** This drop down contains years from "2002" to "2010" It is used to select a year for search criteria.
   **Validation:** NA
   **Default Value:** Current Year if last day of the year for day and month(to date) than next year.
   **Action:** NA
**167. Search Button**
   **Description:** This button begins the search of all data for selected time range. **Validation:** NA
   **Default Value:** NA
   **Action:** Screen is recreated with all relevant data returned.
**168. Fixing Date**
   **Description:** This column contains the date the fixing was executed.
   **Validation:** NA
   **Default Value:** NA
   **Action:** NA
   **Roll Over Text:** NA
   **Format:** NA
**169. Fixing Description**
   **Description:** This column contains the description of the fixing.
   **Validation:** NA
   **Default Value:** NA
   **Action:** NA
   **Roll Over Text:** NA
   **Format:** NA
**170. Entity**
   **Description:** This column contains the name of the entity.
   **Validation:** NA
   **Default Value:** NA
   **Action:** NA
   **Roll Over Text:** NA
   **Format:** NA
**171. Buy Currency**
   **Description:** This column contains the sell currency for the corresponding record. **Validation:** NA
   **Default Value:** NA
   **Action:** NA
   **Roll Over Text:** NA
   **Format:** NA
**172. Buy Amount**
   **Description:** This column contains the buy amount in currency.
   **Validation:** NA
   **Default Value:** NA
   **Action:** NA
   **Roll Over Text:** NA
   **Format:** Numbers will be right aligned.
**173. Sell Currency**
   **Description:** This column contains the sell currency for the corresponding record. **Validation:** NA
   **Default Value:** NA
   **Action:** NA
   **Roll Over Text:** NA
   **Format:** NA
**174. Sell Amount**
   **Description:** This column contains the sell amount in currency.
   **Validation:** NA
   **Default Value:** NA
   **Action:** NA
   **Roll Over Text:** NA
   **Format:** Numbers will be right aligned and signed with red font. Numbers include commas.
**175. Value Date**
   **Description:** This column contains the value date of the corresponding trade. **Validation:** NA
   **Default Value:** NA
   **Action:** NA
   **Roll Over Text:** NA
   **Format:** NA
**176. Spot Rate**
   **Description:** This column contains the bench spot rate + commissions for corresponding trade.
   **Validation:** NA
   **Default Value:** NA
   **Action:** NA
   **Roll Over Text:** NA
   **Format:** Will be right aligned. Numbers include commas.
**177. FWD Points**
   **Description:** This column contains any forward points for trades with value dates farther than spot.
   **Validation:** NA
   **Default Value:** NA
   **Action:** NA
   **Roll Over Text:** NA
   **Format:** Will be right aligned. Numbers include commas.
**178. All In Rate**
   **Description:** This column contains the spot rate with forward points( added or subtracted) for corresponding trade.
   **Validation:** NA
   **Default Value:** NA
   **Action:** NA
   **Roll Over Text:** NA
   **Format:** Will be right aligned. Numbers include commas.

Referring now to the embodiment shown in FIG. 23 (Commission Summary), this report lists summary commission information. It is driven by currency pair and includes all of the necessary information to determine the calculation for determining commissions. It is defaulted to the most recent fixing.

### Fields

**179. Day Dropdown**
   **Description:** This drop down contains 1 - 31 and is used to select day of the month. **Validation:** NA
   **Default Value:** Current Day.
   **Action:** NA
**180. Month Dropdown**
   **Description:** This drop down contains "Jan" - "Dec". It used to select a month for search criteria.
   **Validation:** NA
   **Default Value:** Current Month
   **Action:** NA
**181. Year Dropdown**
   **Description:** This drop down contains years from "2002" to "2010" It is used to select a year for search criteria.
   **Validation:** NA
   **Default Value:** Current Year
   **Action:** NA
**182. Fixing Dropdown**
   **Description:** This drop down contains a list of all active fixings that exist within the OMS system and an option to select <ALL>.
   **Validation:** NA
   **Default Value:** Most recent fixing.
   **Action:** NA
**183. Search Button**
   **Description:** This button begins the search of all data for selected time range. **Validation:** NA
   **Default Value:** NA
   **Action:** Screen is recreated with all relevant data returned.
**184. Currency Pair label**
   **Description:** This label shows the user which currency pair the corresponding financial data belongs. In this embodiment, it also contains 3 categories Internally Crossed, Externally Crossed, and Residual.
   **Validation:** NA
   **Default Value:** NA
   **Action:** NA
   **Roll Over Text:** NA
   **Format:** NA
**185. Buy/Sell Amount column**
   **Description:** This column displays the Buy Amount for the corresponding currency displayed in the currency pair label. It is broken down by internally crossed, externally crossed, and residual as well as a total buy amount. This column also contains a Total Buy at the bottom. This column is equal to the sum of the internally crossed, externally crossed, and residual columns.
   **Validation:** NA
   **Default Value:** NA
   **Action:** NA
   **Roll Over Text:** NA
   **Format:** Should be right aligned. Negative and Red if sell amount. Numbers include commas.
**186. % Of total column**
   **Description:** This column displays what percentage of the total amount the current category (internally crossed, externally crossed, residual) makes up.
   **Validation:** NA
   **Default Value:** NA
   **Action:** NA
   **Roll Over Text:** NA
   **Format:** NA
**187. Commission Rate column**
   **Description:** This column displays what the commission is for the current category (internally crossed, externally crossed, residual) the client is being charged for transacting. This column also contains a weighted average.
   **Validation:** NA
   **Default Value:** NA
   **Action:** NA
   **Roll Over Text:** NA
   **Format:** NA
**188. Fixing Rate**
   **Description:** This column displays the bench fixing rate.
   **Validation:** NA
   **Default Value:** NA
   **Action:** NA
   **Roll Over Text:** NA
   **Format:** NA
**189. Effective Spot Rate**
   **Description:** This column displays the spot rate with the commissions from commission rate column added in. This column also contains an All in Rate, which is the weighted average of the effective spot rates for each category (internally crossed, externally crossed, and residual).
   **Validation:** NA
   **Default Value:** NA
   **Action:** NA
   **Roll Over Text:** NA
   **Format:** NA
**190. USD Value**
   **Description:** This column displays value in USD terms.
   **Validation:** NA
   **Default Value:** NA
   **Action:** NA
   **Roll Over Text:** NA
   **Format:** Right aligned and should include $ symbols. Numbers include commas.

Referring now to the embodiment shown in FIG. 24 (Orders By Enterprise), this reports summarizes all orders by enterprise, and currency pair. It is sorted by enterprise and then currency. User is Instinet® trader.

### Fields

**191. Enterprise column**
   **Description:** This column displays the name of the enterprise. It is also a link. **Validation:** NA
   **Default Value:** NA
   **Action:** This will take the user to the Currency Summary by enterprise. They will then be acting for an enterprise.
   **Roll Over Text:** NA
   **Format:** NA
**192. Currency column**
   **Description:** This column displays the currency pair. It is also a link.
   **Validation:** NA
   **Default Value:** NA
   **Action:** This will take the user to the Order entry page for that currency.
   **Roll Over Text:** NA
   **Format:** NA
**193. # of orders column**
   **Description:** This column displays the number of orders that corresponding enterprise has for the corresponding currency pair.
   **Validation:** NA
   **Default Value:** NA
   **Action:** NA
   **Roll Over Text:** NA
   **Format:** NA
**194. Buy currency Amount**
   **Description:** This column displays the total buy currency amount.
   **Validation:** NA
   **Default Value:** NA
   **Action:** NA
   **Roll Over Text:** NA
   **Format:** Right aligned. Numbers include commas.
**195. Sell currency Amount**
   **Description:** This column displays the total sell currency.
   **Validation:** NA
   **Default Value:** NA
   **Action:** NA
   **Roll Over Text:** NA
   **Format:** Right aligned and signed with red font. Numbers include commas.
**196. Net currency Amount**
   **Description:** This column displays the net currency amount.
   **Validation:** NA
   **Default Value:** NA
   **Action:** NA
   **Roll Over Text:** NA
   **Format:** Right aligned and signed with red font if negative. Numbers include commas.
**197. Buy Amount (USD)**
   **Description:** This column displays the buy amount in dollar terms for corresponding currency pair calculated at the indicative rate.
   **Validation:** NA
   **Default Value:** NA
   **Action:** NA
   **Roll Over Text:** NA
   **Format:** Right aligned with $ included. Numbers include commas.
**198. Sell Amount (USD)**
   **Description:** This column displays the sell amount in dollar terms for corresponding currency pair calculated at the indicative rate.
   **Validation:** NA
   **Default Value:** NA
   **Action:** NA
   **Roll Over Text:** NA
   **Format:** right aligned with $ included and signed with red font. Numbers include commas.
**199. Net Amount (USD)**
   **Description:** This column displays the net amount in dollar terms for corresponding currency pair calculated at the indicative rate.
   **Validation:** NA
   **Default Value:** NA
   **Action:** NA
   **Roll Over Text:** NA
   **Format:** Right aligned with $ included and signed with red font if negative. Numbers include commas.
**200. Indicative Rate**
   **Description:** This column displays the indicative rate for the corresponding currency pair.
   **Validation:** NA
   **Default Value:** NA
   **Action:** NA
   **Roll Over Text:** NA
   **Format:** NA

Referring now to the embodiment shown in FIG. 25 (Trades By Enterprise), this reports summarizes all execute trades by enterprise, and currency pair. User is Instinet® Trader.

### Fields

**201. Day Dropdown**
   **Description:** This drop down contains 1 - 31 and is used to select day of the month. **Validation:** NA
   **Default Value:** Current Day.
   **Action:** NA
**202. Month Dropdown**
   **Description:** This drop down contains "Jan" - "Dec". It used to select a month for search criteria.
   **Validation:** NA
   **Default Value:** Current Month
   **Action:** NA
**203. Year Dropdown**
   **Description:** This drop down contains years from "2002" to "2010" It is used to select a year for search criteria.
   **Validation:** NA
   **Default Value:** Current Year.
   **Action:** NA
**204. Fixing Dropdown**
   **Description:** This drop down contains a list of all active fixings that exist within the OMS system.
   **Validation:** NA
   **Default Value:** Most recent fixing.
   **Action:** NA
**205. Search Button**
   **Description:** This button begins the search of all data for selected time range. **Validation:** NA
   **Default Value:** NA
   **Action:** Screen is recreated with all relevant data returned.
**206. Day Dropdown (for to date)**
   **Description:** This drop down contains 1 - 31 and is used to select day of the month. **Validation:** NA
   **Default Value:** Tomorrows day.
   **Action:** NA
**207. Month Dropdown (for to date)**
   **Description:** This drop down contains "Jan" - "Dec". It used to select a month for search criteria.
   **Validation:** NA
   **Default Value:** Tomorrows month.
   **Action:** NA
**208. Year Dropdown (for to date)**
   **Description:** This drop down contains years from "2002" to "2010" It is used to select a year for search criteria.
   **Validation:** NA
   **Default Value:** Current Year if last day of the year for day and month(to date) than next year.
   **Action:** NA
**209. Enterprise column**
   **Description:** This column displays the name of the enterprise. It also includes a link. **Validation:** NA
   **Default Value:** NA
   **Action:** Takes the user to the commission summary page.
   **Roll Over Text:** NA
   **Format:** NA
**210. Currency column**
   **Description:** This column displays the currency pair.
   **Validation:** NA
   **Default Value:** NA
   **Action:** NA
   **Roll Over Text:** NA
   **Format:** NA
**211. Fixing column**
   **Description:** This column displays the fixing for the given record.
   **Validation:** NA
   **Default Value:** NA
   **Action:** NA
   **Roll Over Text:** NA
   **Format:** NA
**212. Internally Crossed Amount**
   **Description:** This column displays Internally Crossed amount for specified fixing for corresponding currency pair.
   **Validation:** NA
   **Default Value:** NA
   **Action:** NA
   **Roll Over Text:** NA
   **Format:** Right aligned. Numbers include commas.
**213. Externally Crossed Amount**
   **Description:** This column displays externally Crossed amount for specified fixing for corresponding currency pair.
   **Validation:** NA
   **Default Value:** NA
   **Action:** NA
   **Roll Over Text:** NA
   **Format:** Right aligned. Numbers include commas.
**214. Residual Amount**
   **Description:** This column displays residual amount for specified fixing for corresponding currency pair.
   **Validation:** NA
   **Default Value:** NA
   **Action:** NA
   **Roll Over Text:** NA
   **Format:** Right Aligned. Numbers include commas.
**215. Total Amount**
   **Description:** This column displays total amount for specified fixing for corresponding currency pair.
   **Validation:** NA
   **Default Value:** NA
   **Action:** NA
   **Roll Over Text:** NA
   **Format:** Right Aligned. Numbers include commas.
**216. Rate**
   **Description:** This column displays the bench rate or indicative rate. Bench rate if fixing has already occurred, indicative rate if not.
   **Validation:** NA
   **Default Value:** NA
   **Action:** NA
   **Roll Over Text:** NA
   **Format:** Right Aligned. Numbers include commas.
**217. Internally Crossed Amount (USD)**
   **Description:** This column displays Internally Crossed amount for specified fixing for corresponding currency pair in USD terms.
   **Validation:** NA
   **Default Value:** NA
   **Action:** NA
   **Roll Over Text:** NA
   **Format:** Right aligned. In this embodiment, it includes $ symbol and is italicized if fixing has not yet occurred. Numbers include commas.
**218. Externally Crossed Amount (USD)**
   **Description:** This column displays externally Crossed amount for specified fixing for corresponding currency pair in USD terms.
   **Validation:** NA
   **Default Value:** NA
   **Action:** NA
   **Roll Over Text:** NA
   **Format:** Right aligned. Includes $ symbol and is italicized if fixing has not yet occurred. Numbers include commas.
**219. Residual Amount (USD)**
   **Description:** This column displays residual amount for specified fixing for corresponding currency pair in USD terms.
   **Validation:** NA
   **Default Value:** NA
   **Action:** NA
   **Roll Over Text:** NA
   **Format:** Right aligned. Includes $ symbol and will be italicized if fixing has not yet occurred. Numbers include commas.
**220. Total USD Amt (USD)**
   **Description:** This column displays The total dollar amount for specified fixing for corresponding currency pair in USD terms.
   **Validation:** NA
   **Default Value:** NA
   **Action:** NA
   **Roll Over Text:** NA
   **Format:** Right aligned. Includes $ symbol and is italicized if fixing has not yet occurred. Numbers include commas.

Other embodiments also include a Commission field wherein the column displays the total commission for the currency, enterprise and currency pair.
**Validation:** NA
**Default Value:** NA
**Action:** NA
**Roll Over Text:** NA
**Format:** Right aligned. In this embodiment, it includes $ symbol and is italicized if fixing has not yet occurred. Numbers include commas.
**222. Number of entities**
   **Description:** This column displays the number of entities having orders for this enterprise and currency pair.
   **Validation:** NA
   **Default Value:** NA
   **Action:** NA
   **Roll Over Text:** NA
   **Format:** Right aligned. Includes $ symbol and will be italicized if fixing has not yet occurred. Numbers include commas.

Referring now to the embodiment shown in FIG. 26 (Trades By Currency), this reports summarizes all execute trades by enterprise, and currency pair.

### Fields

**223. Day Dropdown**
   **Description:** This drop down contains 1-31 and is used to select day of the month. **Validation:** NA
   **Default Value:** NA
   **Action:** NA
**224. Month Dropdown**
   **Description:** This drop down contains "Jan" - "Dec". It used to select a month for search criteria.
   **Validation:** NA
   **Default Value:** NA
   **Action:** NA
**225. Year Dropdown**
   **Description:** This drop down contains years from "2002" to "2010" It is used to select a year for search criteria.
   **Validation:** NA
   **Default Value:** NA
   **Action:** NA
**226. Fixing Dropdown**
   **Description:** This drop down contains a list of all active fixings that exist within the OMS system. It also includes " <all>" as a list.
   **Validation:** NA
   **Default Value:** NA
   **Action:** NA
**227. Search Button**
   **Description:** This button begins the search of all data for selected time range. **Validation:** NA
   **Default Value:** NA
   **Action:** Screen is recreated with all relevant data returned.
**228. Currency column**
   **Description:** This column displays the currency pair.
   **Validation:** NA
   **Default Value:** NA
   **Action:** NA
   **Roll Over Text:** NA
   **Format:** NA
**230. Internally Crossed Amount**
   **Description:** This column displays Internally Crossed amount for specified fixing for corresponding currency pair.
   **Validation:** NA
   **Default Value:** NA
   **Action:** NA
   **Roll Over Text:** NA
   **Format:** Number is right aligned. Numbers include commas.
**231. Externally Crossed Amount**
   **Description:** This column displays externally Crossed amount for specified fixing for corresponding currency pair.
   **Validation:** NA
   **Default Value:** NA
   **Action:** NA
   **Roll Over Text:** NA
   **Format:** Number is right aligned. Numbers include commas.
**232. Residual Amount**
   **Description:** This column displays residual amount for specified fixing for corresponding currency pair.
   **Validation:** NA
   **Default Value:** NA
   **Action:** NA
   **Roll Over Text:** NA
   **Format:** Number is right aligned. Numbers include commas.
**233. Total Amount**
   **Description:** This column displays total amount for specified fixing for corresponding currency pair.
   **Validation:** NA
   **Default Value:** NA
   **Action:** NA
   **Roll Over Text:** NA
   **Format:** Number is right aligned. Numbers include commas.
**234. Rate. (Indicative rate if fixing has not yet occurred)**
   **Description:** This column displays the bench rate or indicative rate. Bench rate if fixing has already occurred, indicative rate if not.
   **Validation:** NA
   **Default Value:** NA
   **Action:** NA
   **Roll Over Text:** NA
   **Format:** Number is right aligned. Numbers include commas.
**235. Internally Crossed Amount (USD)**
   **Description:** This column displays Internally Crossed amount for specified fixing for corresponding currency pair in USD terms.
   **Validation:** NA
   **Default Value:** NA
   **Action:** NA
   **Roll Over Text:** NA
   **Format:** Number is right aligned and includes $. Italics if Fixing has not yet been executed. Numbers include commas.
**235a. Externally Crossed Amount (USD)**
   **Description:** This column displays externally Crossed amount for specified fixing for corresponding currency pair in USD terms.
   **Validation:** NA
   **Default Value:** NA
   **Action:** NA
   **Roll Over Text:** NA
   **Format:** Number is right aligned and includes $. Italics if Fixing has not yet been executed. Numbers include commas.
**236. Residual Amount (USD)**
   **Description:** This column displays residual amount for specified fixing for corresponding currency pair in USD terms.
   **Validation:** NA
   **Default Value:** NA
   **Action:** NA
   **Roll Over Text:** NA
   **Format:** Number is right aligned and includes $. Italics if fixing has not yet been executed. Numbers include commas.
**Total Commission (USD) (Not reflected in the embodiment shown.)**
   **Description:** This column displays total commission in dollars.
   **Validation:** NA
   **Default Value:** NA
   **Action:** NA
   **Roll Over Text:** NA
   **Format:** Number is right aligned and includes $. Italics if fixing has not yet been executed. Numbers include commas
**# of tickets (Not reflected in the embodiment shown)**
   **Description:** This column displays the number of individual tickets that make up that order.
   **Validation:** NA
   **Default Value:** NA
   **Action:** NA
   **Roll Over Text:** NA
   Format: Number is right aligned.

Referring now to the embodiment shown in FIG. 27 (Crossing Report), this report displays to customer cross statistics including internal, external, and residual amounts.

### Fields

**241. Currency column**
   **Description:** This column contains currency pair.
   **Validation:** NA
   **Default Value:** NA
   **Action:** NA
   **Roll Over Text:** NA
   **Format:** NA
**242. Buy Amount**
   **Description:** This column contains total buy currency.
   **Validation:** NA
   **Default Value:** NA
   **Action:** NA
   **Roll Over Text:** NA
   **Format:** NA
**243. Sell Amount**
   **Description:** This column contains total of sell currency.
   **Validation:** NA
   **Default Value:** NA
   **Action:** NA
   **Roll Over Text:** NA
   **Format:** Numbers displayed in red and have negative sign. Numbers include commas.
**244. Internally Crossed Amount**
   **Description:** This column contains total internally crossed amount for corresponding currency pair.
   **Validation:** NA
   **Default Value:** NA
   **Action:** NA
   **Roll Over Text:** NA
   **Format:** NA
**245. Externally Crossed Amount**
   **Description:** This column contains total externally crossed amount for corresponding currency pair.
   **Validation:** NA
   **Default Value:** NA
   **Action:** NA
   **Roll Over Text:** NA
   **Format:** NA
**246. Residual Amount**
   **Description:** This column contains total Residual amount for corresponding currency pair.
   **Validation:** NA
   **Default Value:** NA
   **Action:** NA
   **Roll Over Text:** NA
   **Format:** NA

Referring now to the embodiment shown in FIG. 28 (Audit Report). In this embodiment, all actions are recorded in the OMS system. This report displays audit information for a specified period of time. It includes information identifying user as well as detailed description of what is being done in the system when. This report defaults to today's date.

### Fields

**247. Day Dropdown**
   **Description:** This drop down contains 1 - 31 and is used to select day of the month. **Validation:** NA
   **Default Value:** Defaults to current day.
   **Action:** NA
**248. Month Dropdown**
   **Description:** This drop down contains "Jan" - "Dec". It used to select a month for search criteria.
   **Validation:** NA
   **Default Value:** Defaults to current month.
   **Action:** NA
**249. Year Dropdown**
   **Description:** This drop down contains years from "2002" to "2010" It is used to select a year for search criteria.
   **Validation:** NA
   **Default Value:** Defaults to current year.
   **Action:** NA
**250. Search Button**
   **Description:** This button begins the search of all data for selected time range. **Validation:** NA
   **Default Value:** NA
   **Action:** Screen is recreated with all relevant data returned.
**251. Action Type column**
   **Description:** This column displays type of action identified in OMS system. **Validation:** NA
   **Default Value:** NA
   **Action:** NA
   **Roll Over Text:** NA
   **Format:** NA
**252. Username**
   **Description:** This column the Username identified in OMS system.
   **Validation:** NA
   **Default Value:** NA
   **Action:** NA
   **Roll Over Text:** NA
   **Format:** NA
**253. Enterprise**
   **Description:** This column contains the enterprise of the user being audited. **Validation:** NA
   **Default Value:** NA
   **Action:** NA
   **Roll Over Text:** NA
   **Format:** NA
**254. User Type**
   **Description:** This column contains the user type of the user being audited. **Validation:** NA
   **Default Value:** NA
   **Action:** NA
   **Roll Over Text:** NA
   **Format:** NA
**255. Description**
   **Description:** This column displays a more detailed explanation of what happened in the OMS system.
   **Validation:** NA
   **Default Value:** NA
   **Action:** NA
   **Roll Over Text:** NA
   **Format:** NA
**256. Date**
   **Description:** This column displays the date of the action identified in OMS system. **Validation:** NA
   **Default Value:** NA
   **Action:** NA
   **Roll Over Text:** NA
   **Format:** NA

Embodiments of the present invention have now been described in fulfillment of the above objects. It will be appreciated that these examples are merely illustrative of the invention. Many variations and modifications will be apparent those skilled in the art.

## Claims

1. A method for foreign exchange execution, comprising the steps of:
receiving from a remote computer system a selection of a currency pair and a value date for a foreign exchange crossing process;
receiving an amount specified in a buy or sell order for an anonymous entity;
executing the order with minimal market impact; and
providing the entity a report on how much of the order has been matched in the crossing process.

2. The method of claim 1 further comprising the step of:
receiving residual instructions to execute residual portions of the order at a benchmark rate.

3. The method of claim 2 further comprising the step of:
undertaking a market risk associated with guaranteeing the benchmark rate.

4. The method of claim 3 further comprising the step of:
providing the entity a report on how much of the order was residual.

5. A method for buying and selling currencies, comprising the steps of:
receiving market data;
receiving a selection of a currency pair from a entity over a computer network;
receiving a buy or sell order from the entity; and
receiving residual instructions to execute residual portions of the order at a benchmark rate.

6. The method of claim 5 wherein the computer network is the internet.

7. The method of claim 5 further comprising the step of:
executing the order whereby market impact is avoided.

8. The method of claim 5 wherein the residual instructions involve sending all residuals back to the entity.

9. The method of claim 5 wherein the residual instructions involve executing all residuals at the benchmark rate.

10. The method of claim 5 wherein if a residual is less than/greater than an amount, the residual instructions involve executing up to an amount/percentage of the residual at the benchmark rate.

11. The method of claim 5 further comprising the steps of:
receiving a value date from the entity;
providing the entity an ability to modify, save, or cancel the order before a cutoff time; and
performing a credit check of the order.

12. The method of claim 5 further comprising the steps of:
providing the entity a report on how much of its order has been matched and how much was residual.

13. A system for foreign exchange execution, comprising:
means for receiving from a remote computer system a selection of a currency pair and a value date for a foreign exchange crossing process;
means for receiving an amount specified in a buy or sell order for an anonymous entity;
means for executing the order with minimal market impact; and
means for providing the entity a report on how much of the order has been matched in the crossing process.

14. The system of claim 13 further comprising:
means for receiving residual instructions to execute residual portions of the order at a benchmark rate.

15. The system of claim 14 further comprising:
means for undertaking a market risk associated with guaranteeing the benchmark rate.

16. The system of claim 15 further comprising:
means for providing the entity a report on how much of the order was residual.

17. A system for buying and selling currencies, comprising:
means for receiving market data;
means for receiving a selection of a currency pair from a entity over a computer network;
means for receiving a buy or sell order from the entity; and
means for receiving residual instructions to execute residual portions of the order at a benchmark rate.

18. The system of claim 17 wherein the computer network is the internet.

19. The system of claim 17 further comprising:
means for executing the order whereby market impact is avoided.

20. The system of claim 17 wherein the residual instructions involve sending all residuals back to the entity.

21. The system of claim 17 wherein the residual instructions involve executing all residuals at the benchmark rate.

22. The system of claim 17 wherein if a residual is less than/greater than an amount, the residual instructions involve executing up to an amount/percentage of the residual at the benchmark rate.

23. The system of claim 17 further comprising:
means for receiving a value date from the entity;
means for providing the entity an ability to modify, save, or cancel the order before a cutoff time; and
means for performing a credit check of the order.

24. The system of claim 17 further comprising:
means for providing the entity a report on how much of its order has been matched and how much was residual.

25. A system for foreign exchange execution, comprising:
a receiving component for receiving from a remote computer system a selection of a currency pair and a value date for a foreign exchange crossing process, and an amount specified in a buy or sell order for an anonymous entity;
a processing component for executing the order with minimal market impact;
a transmitting component for providing the entity a report on how much of the order has been matched in the crossing process.

26. The system of claim 25 wherein the receiving component receives residual instructions to execute residual portions of the order at a benchmark rate.

27. The system of claim 25 wherein the transmitting component provides the entity a report on how much of the order was residual.

28. A system for buying and selling currencies over a computer network, comprising:
a receiving component for receiving market data, a selection of a currency pair from a entity, a buy or sell order from the entity; and residual instructions to execute residual portions of the order at a benchmark rate;
a transmitting component for providing an entity a report on how much of its order has been matched and how much was residual;
a data storage medium for performing a credit check of the order; and
a processing component for providing the entity an ability to modify, save, or cancel the order before a cutoff time.

29. The system of claim 28 wherein the computer network is the internet.

30. The system of claim 28 wherein the residual instructions involve sending all residuals back to the entity.

31. The system of claim 28 wherein the residual instructions involve executing all residuals at the benchmark rate.

32. The system of claim 28 wherein if a residual is less than/greater than an amount, the residual instructions involve executing up to an amount/percentage of the residual at the benchmark rate.
